(19) Europäisches Patentamt
European Patent Office
Office européen des brevets

(11) Publication number : **0 330 618 B1**

# (12) EUROPEAN PATENT SPECIFICATION

(45) Date of publication of patent specification : **09.11.94 Bulletin 94/45**

(51) Int. Cl.⁵ : **G02B 1/04,** C08G 77/46, C08F 299/08

(21) Application number : **89810126.6**

(22) Date of filing : **16.02.89**

## (54) Wettable, rigid gas permeable, substantially non-swellable contact lens.

(30) Priority : **26.02.88 US 160968**

(43) Date of publication of application : **30.08.89 Bulletin 89/35**

(45) Publication of the grant of the patent : **09.11.94 Bulletin 94/45**

(84) Designated Contracting States : **AT BE CH DE ES FR GB GR IT LI LU NL SE**

(56) References cited :
**EP-A- 0 109 355**
**EP-A- 0 176 481**
**EP-A- 0 267 158**

(56) References cited :
**FR-A- 2 398 084**
**US-A- 4 259 467**
**PATENT ABSTRACTS OF JAPAN, vol. 7, no. 146 (P-206)[1291], 25th July 1983; & JP-A-58 58 519**

(73) Proprietor : **CIBA-GEIGY AG**
**Klybeckstrasse 141**
**CH-4002 Basel (CH)**

(72) Inventor : **Robertson, J. Richard**
**3415 Aubusson Trace**
**Alpharetta Georgia 30201 (US)**
Inventor : **Su, Kai Chiang**
**13090 Hopewell Road**
**Alpharetta Georgia 30201 (US)**

**EP 0 330 618 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to ophthalmic devices, such as contact lenses and intraocular implants, and particularly contact lenses of a block copolymer containing polysiloxane and polyoxyalkylene oxide units possessing an advantageous blend of desirable properties including a) high oxygen permeability, b) good wettability, c) optical clarity and d) a substantially lack of aqueous swellability in the ocular environment of use.

The use of siloxane containing materials of various types in the fabrication of ophthalmic devices is well known.

Thus, in U.S. 3,996,187; 3,996,189; 3,341,490 and 3,228,741 there are described contact lenses fabricated from poly (organosiloxanes) containing fillers. While such lenses are generally soft and of high oxygen permeability, the use of fillers such as silica, is indicated in order to increase the otherwise generally poor tear strength and tensile strength. Also, such silicone rubber lenses are characteristically both hydrophobic and lipophilic.

U.S. 3,808,178 discloses hard contact lenses fabricated from copolymers of a polysiloxanylalkyl acrylate or methacrylate ester and an alkyl acrylate or methacrylate ester. The monomers and polymers of the patent are hydrophobic and are incompatible with hydrophilic materials such as hydroxyethyl methacrylate.

U.S. 4,136,250 discloses hydrogels of a copolymer of about 20 to about 90 % of a hydrophilic (or mixture of hydrophilic and hydrophobic) monomer and about 10 to about 80 % of a polyolefinic siloxane macromer which can be used to fabricate a contact lens. Typically, such hydrogels are recited to possess a degree of swelling of about 10 to about 12 %. It has been found, however, that the presence of substantial amounts of water in such hydrogels limits the oxygen permeability of such materials.

U.S. 4,153,641 relates, in relevant part, to contact lenses fabricated from a polymer of a polyorganosiloxane terminated with vinylic groups, or copolymers thereof with other monomers. The exemplified products therein are hydrophobic in nature.

U.S. 4,486,577 relates to copolymers of about 8 to 70 % of a polysiloxane macromer containing at least two vinyl groups and 30-92 % of a monomer which is at least predominantly water insoluble to make polymers useful, for example, as contact lenses.

Generally, such prior art contact lens compositions are either insufficiently hydrophilic in terms of surface wettability to be acceptable to the contact lens profession, even though they may possess high oxygen permeability, or such contact lenses are of acceptable wettability but the hydrophilicity is coupled with water swellability, which tends to limit optimum oxygen permeability.

It is an object of the present invention to overcome these and other disadvantages of the art by providing ophthalmic devices, such as contact lenses and corneal implants, possessing a high degree of surface wettability and possessing a high degree of oxygen permeability but which are substantially non-swellable in the aqueous environment of use, by employing a crosslinked block polymer containing polysiloxane and polyalkylene oxide units.

A further object of the invention is to provide a method of correcting visual defects in the form of refractive errors by fitting to the patient's eye in need of the same a corrective contact lens of such polymer. These and other objects of the invention are apparent from the following detailed description of the invention.

These and other objects of the invention are realized by a polymer fabricated from a monomer having repeating units S′ of the formula

$$-L4-(A1)_{x1}-(B2A2)_{x2}-(B1)_{x3}-L5- \qquad (I)$$

wherein each of x1 and x3 is independently 0-25 and x2 is 1-25;
each of A1, A2, B1 and B2 is independently selected from linear siloxanes and from cyclic siloxanes having 6 or 8 ring members selected from silicon and oxygen, each of which is terminated on one side by a linking group; and each L4 and each L5 is independently selected from a bond or the same group from which L1 and L2 as defined hereinafter are selected.

In a most preferred embodiment, the monomer having units of fomula I is of the formula

$$L'-(D-A-L)_{a1}-(S'')_{c}-(S'-L''')_{a2}-L'' \qquad (II)$$

wherein L′ and L″ are terminating polymerizable groups; L‴ is a bond or a linking group; D is -O-, -NH-, or -N(loweralkyl)- or a bond; one of a1 and a2 is zero and the other is one; S″ is of the formula

$$-(S'-L-D-A-L)_{a}- \qquad (III)$$

wherein a is 1-10; c is 1-10; and a times c is 1-10; each L is as defined hereinafter; each S′ is of formula I as

defined before; and each A is a poly lower alkylene glycol group.

The monomer set out of above is polymerized into a polymeric material which may then be finished into a rigid gas permeable contact lens or other device.

One embodiment of the instant invention relates to an optically clear, hydrolytically stable, biologically inert, wettable, oxygen permeable ophthalmic device, such as a contact lens, which is substantially non-swellable in aqueous ocular tear fluid, which is fabricated from a crosslinked polymer of a reactive monomer having a segment S″ of the formula

$$-(S'\text{-}L\text{-}D\text{-}A\text{-}L)_a- \quad \text{(III)}$$

wherein each D is independently selected from -O- and -N(R)- wherein R is hydrogen or lower alkyl, e.g. $C_{1-4}$ alkyl, preferably hydrogen or methyl;
a is an integer of 1-10;
each L is independently -BGB′-, -G-, -BG- or -GB-;
each S′ is independently a segment of the formula

$$-L4-(A1)_{x1}-(B2A2)_{x2}-(B1)_{x3}-L5- \quad \text{(I)}$$

in which x1 and x3 are each independently an integer from zero to 25;
x2 is an integer from 1 to 25;
and each of A1, A2, B1 and B2 is independently selected from
a) linear siloxanes of the formula

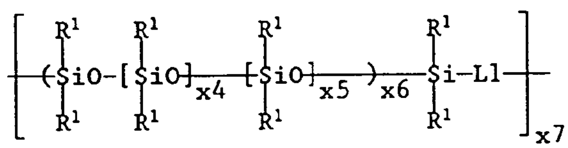

(IV)

and b) cyclic siloxanes of the formula

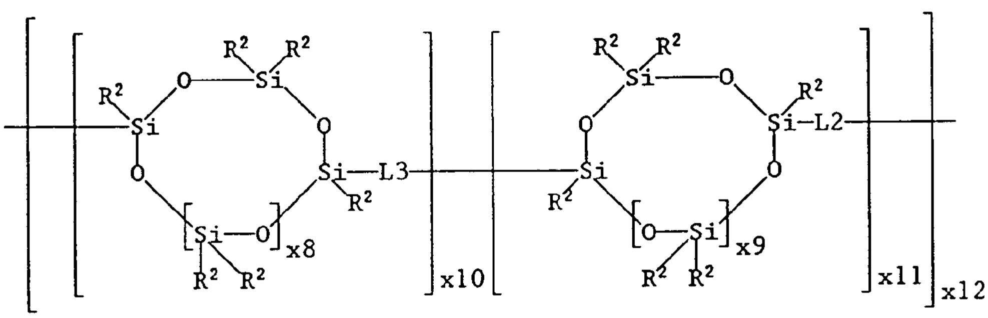

(V)

provided that A1 is not the same as B2 and B1 is not the same as A2 and B2 and A2 are not the same;
further provided that at least one of A1, A2, B1 and B2 is of formula (V);
in which each $R^1$ may be the same or different;
each $R^2$ may be the same or different;
each of x4, x5, x6 and x10 is independently zero to 25;
each of x7, x11 and x12 is independently 1 to 25;
each of x8 and x9 is independently zero or one;
each of $R^1$ and $R^2$ is independently selected from
aa) $C_{1-18}$ alkyl and aryl of up to 12 carbon atoms, each of which is unsubstituted or substituted by halogen, preferably fluoro, or by $C_{1-4}$ alkyl,
ab) halogen, preferably fluoro; and
ac) a group of the formula

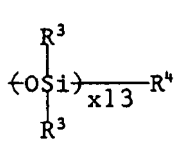

(VI)

wherein each $R^3$ is independently $C_{1-14}$ alkyl, $-OSi(R^5)_3$, or $C_{6-12}$ aryl, with each $R^5$ and $R^4$ independently selected from $C_{1-4}$ alkyl, $C_{6-12}$ aryl, epoxy, halogen, hydroxy $C_{1-4}$ alkyl, amino, amino $C_{1-4}$ alkyl, hydroxy, isocyanato and isothiocyanato; and x13 is 1 to 12, preferably 1 to 5, more preferred 1 or 2;
L3 is a linking group of the formula

$$-W-(G-W)_{a3}- \qquad (VII)$$

wherein a3 is zero or one;
each W is selected from

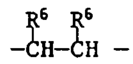

and -O-, when a3 is zero or one,
and further from

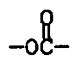 and 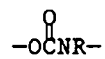

when a3 is one;
and in which the atom of W bonded to a silicon atom is either a saturated carbon atom or an oxygen atom, and each $R^6$ is independently hydrogen or lower alkyl, preferably hydrogen or methyl;
L1 and L2 are each selected from
ba) a group of formula VII when linking 2 silicon atoms and
bb) a group of the formula

$$-W-(G-J)_{a4}- \qquad (VIII)$$

when not linking two silicon atoms and in is bound to a silicon atom, in which a4 is zero or one; W is as defined hereinbefore;
and J is selected from a bond,

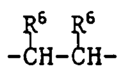, -O-, 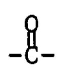, 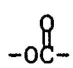, 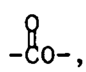, 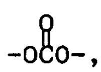, 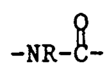, 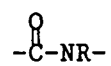, 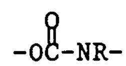,

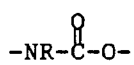 and 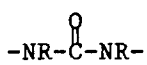;

L4 is independently selected from a bond and groups of formula VII and VIII;
L5 is independently selected from a bond and groups of formula VII and VIII;
each B and B′ is independently selected from a bond,

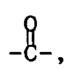, 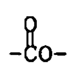, and 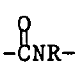

wherein the carbonyl is bonded to L4, L5, D, or A;
G is selected from the group of

i) a divalent, aliphatic linking group, preferably alkyl, alkenyl, or alkynyl, of up to 25 carbon atoms which may be interrupted by an interrupting unit selected from

-O-, 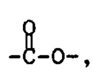, 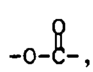, -NR-, 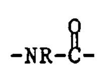, 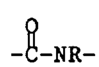,

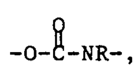, 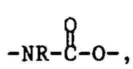, 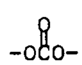, or 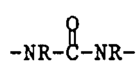,

and which divalent groups may be substituted by lower alkyl;

ii) a divalent 5-7 membered cycloaliphatic, a divalent 5-7 membered cycloaliphatic-$C_{1-18}$ aliphatic, and a divalent $C_{1-18}$ aliphatic-5-7 membered cycloaliphatic-$C_{1-18}$ aliphatic group, each of which may be interrupted in the non cyclic portion or between the cyclic and noncyclic portions thereof by an interrupting unit or substituted by a substituent or both interrupted and substituted as set forth in i) above;

iii) a divalent $C_{6-25}$ arylene which is unsubstituted or substituted by a substituent selected from halogen, $C_{1-4}$ alkyl, $C_{1-12}$ perhaloalkyl, amino, carboxy, $C_{1-4}$ alkoxy carbonyl, amino carbonyl, $C_{1-4}$ alkylamino-carbonyl, di($C_{1-4}$ alkyl) amino carbonyl and a polyglycol of the formula

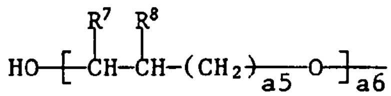

(IX)

wherein a5 is zero or one;

one of $R^7$ and $R^8$ is hydrogen and the other is methyl or hydrogen when a5 is zero; and both $R^7$ and $R^8$ are hydrogen when a5 is one;

and a6 is an integer of up to 60, preferably up to 25;

iv) a divalent aralkyl or alkaryl, having 7-25 carbon atoms, each of which may be interrupted in the alkyl portion or between the alkyl and aryl portions by an interrupting group set forth in i) above, and each of said uninterrupted and interrupted aralkyl and alkaryl groups is unsubstituted or substituted on the aryl ring as set forth in iii) and/or substituted in the alkyl portion by a substituent set forth in i);

v) a divalent aliphatyl-aryl-aliphatyl wherein the total number of aliphatyl carbon atoms is up to 40, preferably up to 25, and the aryl portion being $C_{6-14}$, each aliphatyl portion being alkylene, alkenylene or alkynylene, the aliphatyl portions being uninterrupted or interrupted by an interrupting unit set forth in i) above, the aliphatyl-aryl-aliphatyl also being possibly interrupted between one or both of the aliphatyl groups and the aryl group by an interrupting group as set forth in i) above, the aliphatyl groups being unsubstiuted or substitued by a substituent set forth in i) above, and/or the aryl portion being unsubstituted or substituted by a substituent set forth in iii) above;

each A is independently a segment of formula X,

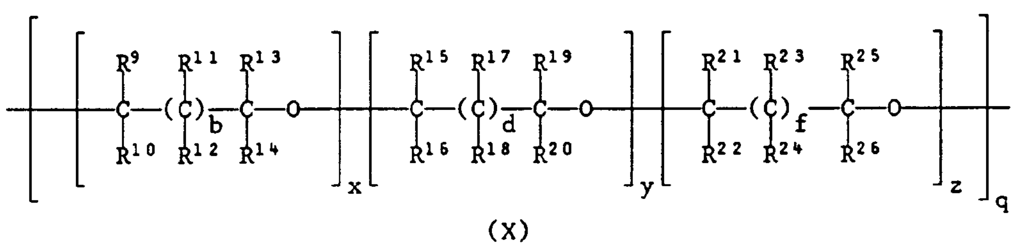

(X)

the terminal oxygen within each unit of formula X being replaceable by -N(R)-;

wherein each b, d and f is independently 0 - 4, preferably 0 or 1; q is a number from 1 to 1000; each x, y and z is independently 0 to 100 at least one of x, y and z being at least 1; and (x+y+z) multiplied by q is 4 to 1000, preferably 4-250, more preferably 4-100;

each of $R^9$, $R^{10}$, $R^{13}$-$R^{16}$, $R^{19}$-$R^{22}$, $R^{25}$ and $R^{26}$ is independently selected from the group consisting of hydrogen, halogen (preferably fluorine or chlorine, more preferably fluorine), an aliphatic, aromatic or heterocyclic containing radical selected from unsubstituted $C_1$-$C_{16}$ alkyl;

substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$, preferably $C_1$-$C_8$, alkoxy, formyloxy, $C_2$-$C_{16}$ alkanoyloxy, aryloxy of up to 10 carbon atoms, $C_3$-$C_6$ alkenoyloxy, aroyl of up to 11 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxycarbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being unsubstituted or substituted by $C_1$-$C_6$ alkyl, fluoro or a $C_1$-$C_6$ alkoxy provided said last mentioned alkoxy is not bound to a carbon atom already singly bound to another oxygen atom; $R^9$, $R^{10}$, $R^{13}$-$R^{16}$, $R^{19}$-$R^{22}$, $R^{25}$ and $R^{26}$ being further inde-

pendently selected from aryl of up to 10 carbon atoms, $C_3$-$C_8$ cycloalkyl, and oxacycloalkyl of up to 7 carbon atoms, each of which are unsubstituted or further substituted with a substituent selected from the group of substituents for said $R^9$ alkyl set forth above;

$R^{11}$, $R^{12}$, $R^{17}$, $R^{18}$, $R^{23}$ and $R^{24}$ are selected from the same groups set forth above for $R^9$; and $R^{11}$, $R^{12}$, $R^{17}$, $R^{18}$, $R^{23}$ and $R^{24}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which are unsubstituted or substituted by fluoro, aryl of up to 10 carbon atoms, or $C_1$-$C_{16}$ alkoxy, and $R^{11}$, $R^{12}$, $R^{17}$, $R^{18}$, $R^{23}$ and $R^{24}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which are unsubstituted or substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^9$-$R^{26}$, together with the atoms to which they are attached may form a 5 - 8 membered cycloalkyl, oxacycloalkyl or bicycloalkyl ring.

In the foregoing, all alkyl groups whether mentioned alone or as part of another group are preferably $C_1$-$C_4$ alkyl, such as methyl, ethyl, propyl and butyl, especially t-butyl, with the exception that adjacent groups on aryl rings cannot each be t-butyl. These alkyl groups may be straight chain or branched chain. When the alkyl is a substituent on a phenyl ring, it is preferably attached at the para position. Preferably alkenyl groups, whether alone or as part of another group, are $C_2$-$C_4$ alkenyl, such as ethenyl, propenyl and butenyl. Preferred aryl groups (whether alone or as part of another group) are phenyl and naphthyl, more preferably phenyl. Preferably the aryl groups are still further substituted by $C_1$-$C_4$ alkyl, more preferably t-butyl, most preferably in the para position. Halogen may be chloro, bromo, iodo or fluoro.

Preferably b, d and f are independently 0 - 3, more preferably 0 - 2, most preferably 0 or 1. Wherever cyclo groups are indicated, whether carbocyclic or heterocyclic they preferably have 5 - 6 ring members and the heterocyclics preferably have only carbon atoms and an oxygen atom as ring members.

Bicycloalkyl is understood to cover those groups when two adjacent R groups in a segment of formula X together form a ring and one of them already is a cycloalkyl group. In other words a fused ring system made up of two geminal R groups and the carbon atom to which they are attached results. For example if $R^9$ is cyclopropyl and $R^{10}$ is methyl then $R^9$ and $R^{10}$ together with the carbon to which it is attached could be (2,1,0) cyclopent-2,2-diyl.

In formula X, when b is greater than one, each of the multiple $R^{11}$ and $R^{12}$ groups may be the same or different; however preferably all of the $R^{11}$ groups are the same and all of the $R^{12}$ groups are the same. The same is true with respect to d, $R^{17}$, and $R^{18}$; and f, $R^{23}$, and $R^{24}$.

Preferably, each of b, d and f is independently an integer of 0 to 2, and most preferably zero or one.

In one aspect of the invention, each of $R^9$-$R^{13}$, $R^{15}$-$R^{19}$ and $R^{21}$-$R^{25}$ is hydrogen. Preferably the substituents $R^{14}$, $R^{20}$ and $R^{26}$ are alkyl of up to 16 carbon atoms; alkyl of up to 16 carbon atoms substituted by alkoxy of up to 8 carbon atoms, or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl; or oxacycloalkyl of 4 or 5 ring carbon atoms.

The reactive monomers of having units of formula I and formula III are preferably of the formula

$$L'\text{—}(D\text{—}A\text{—}L)_{a1}\text{—}(S'')_{c}\text{—}(S'\text{—}L''')_{a2}\text{—}L'' \qquad (II)$$

in which one of al and a2 is zero, and the other is one;

S″, D, A, S′ and L are as defined above;

c is 1 to 10, but a times c is 1-10;

L‴ is a bond or a linking group G;

L′ and L″ are each independently hydrogen or a polymerizable functional group selected from P′, P′-B-, P′-GB-, P′-BG- and P′-BGB′- wherein G, B′ and B are as defined hereinbefore and P′ is an ethylenically unsaturated group, or is amino, hydroxy, isocyanato, isothiocyanato, carboxy, carboxylic acid anhydride, carboxylic acid chloride, or epoxy or other moiety containing a crosslinkable group which may be crosslinked when coreacted with a suitable crosslinking agent or when irradiated by actinic radiation.

A highly advantageous subembodiment relates to wettable, non-swellable ophthalmic devices, preferably

contact lenses, fabricated from a polymer of formula II wherein A is of the formula XI,

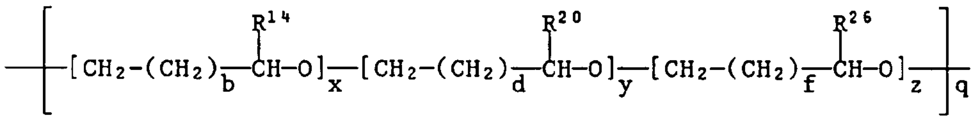

XI

wherein b, d, f, q, x, y, z, $R^{14}$, $R^{20}$ and $R^{26}$ are as defined above. There are two very highly advantageous embodiments having formula XI which are represented by either formula XII

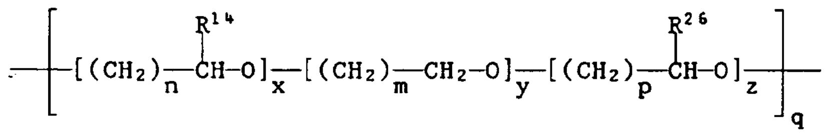

(XII)

wherein n is b + 1; m is d + 1, p is f + 1; n, m and p each independently being preferably 1 - 3, more preferably 1 or 2, most preferably 1; and x, y, z and q are as defined above; $R^{14}$ and $R^{26}$ are hydrogen or one is, but preferably both are, an aliphatic, aromatic, or heterocyclic radical, preferably alkyl of up to 6 carbon atoms, alkyl of up to 6 carbon atoms substituted by alkoxy of up to 6 carbon atoms or fluoro; phenyl which is unsubstituted or substituted by fluoro, alkoxy of up to 6 carbon atoms or alkyl of up to 6 carbon atoms; benzyl wherein the phenyl ring thereof is unsubstituted or substituted by fluoro, alkoxy of up to 6 carbon atoms or alkyl of up to 6 carbon atoms; cyclohexyl or oxacycloalkyl of 4 or 5 ring carbon atoms; or which are represented by formula XIII

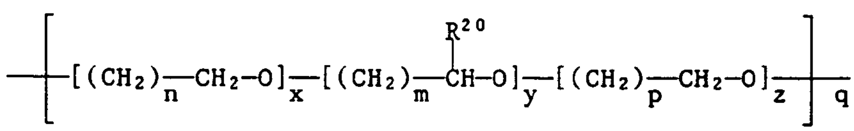

(XIII)

wherein n, m, p, x, y, z and q are as defined above for formula XII and $R^{20}$ is preferably selected from the same group as $R^{14}$ in formula XII.

In the foregoing it is to be understood that the units of x, y and z may be positioned randomly, in block segments, or alternately.

Another preferred embodiment corresponds to formulae XI, XII and XII wherein z is zero.

Desirably, the polymer segments of formula X or XI in the completed polymer are predominantly and preferably substantially devoid of free hydroxyl groups in the interior of the polymer as such groups tend to reduce oxygen permeability.

Free hydroxy groups on the outer surfaces of the formed polymer are acceptable as they increase wettability without drawing water into the polymer matrix. However, it is still preferable to have as few free hydroxy groups in the finished polymer as practical if a contact lens having high oxygen permeability is to be prepared. A suitable means of tying up the free hydroxy groups present would be to interact them with a color group.

Typical color groups useful in these embodiments include, but are not limited to, the hydroxy-reactive dyes known in the art under the trade-name Remazol, manufactured by American Hoechst. Examples of the Remazol dyes which are especially useful are:

| Dye | Color Index Code |
| --- | --- |
| Remazol Brill Blue RW | Reactive Blue 19 |
| Remazol Yellow GR | Reactive Yellow 15 |
| Remazol Black B | Reactive Black 5 |
| Remazol Golden Orange 3GA | Reactive Orange 78 |
| Remazol Turquoise P | Reactive Blue 21 |

all of which have at least one group of the formula

$$-SO_2-CH_2CH_2O-SO_3^{\ominus}$$

which reacts with the polymer or monomer hydroxy group to yield a

dye-$SO_2$-$CH_2$-$CH_2$-O-polymer or

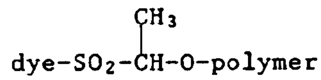

group, preferably the former. In such a manner, both excess free hydroxy groups are disposed of and colored contact lenses can be realized simultaneously. The color group or former can be reacted with monomer before the monomer is incorporated into the structure of formula I or afterwards. Another means of disposing of these excessive hydroxy groups is to utilize their presence to form various degrees and types of crosslinking.

When the monomer having groups of formula I has ethylenically unsaturated groups, a vinylic comonomer is frequently utilized to increase the hydrophilicity of the final product without substantially altering the other properties mentioned above. Typically, when the comonomer is a polyethylene glycol of the formula

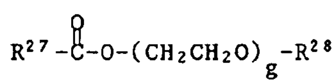

or pyrrolidone of the formula

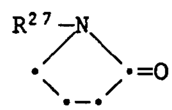

with g being 1-25, $R^{28}$ being hydrogen or methyl and $R^{27}$ being $CH_2$=CH-, $CH_2$=C($CH_3$)- or other UV curable or addition polymerizable or condensation polymerizable moiety, the resultant polymer is more hydrophilic than previously, but the Dk is essentially the same as when the comonomer is absent. Other hydrophilic comonomers which can be used are disclosed in a copending US application entitled HYDROPHILIC MODIFIER MONOMERS, invented by Frank Molock, Richard Robertson, and Kai Su.

Usually, when present, hydrophobic vinylic comonomers are used in an amount of about 2 % to about 80 %, preferable no more than 70 %, more preferable no more then 50 %, by weight of the resultant polymer. When present, hydrophilic comonomers are used in an amount of about 2 % to about 15 % by weight of the resultant polymer. Advantageously, no more than 5 % of vinylic comonomer is used when the compound having units of formula III has a molecular weight in excess of 8000. Generally, when the compound having unit of formula III has a molecular weight of under about 4000, up to 10 % by weight of hydrophilic vinylic comonomer can be used. When the compound of formula XII has a molecular weight between 4,000 and 8,000, the maximum amount of hydrophilic vinylic comonomer is between 5 % and 10 by weight.

When P′ is

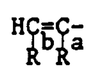

with $R^a$ and $R^b$ as defined below or contains such a group (i.e.

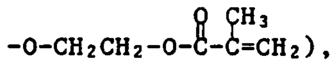

then the monomer of formula II can be crosslinked in the presence or absence of up to less than about 50 %, preferably up to about 30 %, most preferably up to about 10 % by weight of other vinylic comonomers, provided that such comonomers are substantially free of hydroxy groups in the final product. $R^a$ and $R^b$ are each independent hydrogen, lower alkyl, preferably methyl, or cyano.

When P′ does not have a vinylic group, but takes part in crosslinking, P′ contains e.g. an active hydrogen. In such cases, P′ preferably terminates in an OH, $NHR^c$ ($R^c$ being hydrogen or lower alkyl), a leaving group bound directly to the B or B′ carbonyl, a conventional acyl leaving group when not so bound, SCN- or OCN-. Crosslinking is then typically carried out by condensation or addition with a di- or polyfunctional coreactive monomer. For example, when P′ is OH, then the coreactive monomer functional group can be $NHR^c$, -COOH, OCN-, SCN-, etc.; when P′ is $NHR^c$, the reactive comonomer functional group can be a conventional acyl, or acyl bound to a conventional leaving group; and when P′ has OCN- or SCN-, then the reactive comonomer functional group can be OH. Similarly, the other coreactive functional groups mentioned in terms of either P′ or the coreactive monomer can be interchanged (those mentioned as part of P′ being on the coreactive monomer and those mentioned as part of the coreactive monomer being part of P′).

Suitable vinylic comonomers and coreactive monomers for condensation are set forth below. However, the list is not exhaustive and those of ordinary skill will appreciate the modifications, additions, and alternatives which may also be employed.

When either or both L′ and L″ are hydrogen, or terminate in P′ with P′ being hydrogen, at least one additional crosslinkable moiety must be present as one of, or as substituent on one of, the groups G, $R^1$, $R^2$ or $R^9$-$R^{26}$. Such crosslinkable groups may also be present as a substituent on or in place of one or more of G, $R^1$, $R^2$ or $R^9$-$R^{26}$ even when one or both of L′ and L″ have crosslinkable groups therein. However, the degree of crosslinking in the finished crosslinked polymer should not exceed 10 %, preferably not more than 5 %, and should be still more preferably in the range of 1 - 4 %, most preferably in the range of 2 - 3 %.

Within the polymer fabricated from monomers of formula I, not more than 20-70%, preferably not more than 50 % of the A groups are polyethylene glycol.

The number of A units and the chain length and nature of the substituents on the polyoxyethylene segment is determined by the degree of wettability desired in the polymer of the compound of formula I. In general, the polymer should be sufficiently hydrophilic in its surface properties such that the polymer exhibits a contact angle with distilled water at 20°C of less than 60°, preferably less than 40°, more preferably less than 25°, still more preferably less than 15°, most preferably less than 10°.

The greater the number of siloxane units, the greater the number of oxyalkylene units is generally required to reduce the contact angle to within the above limits.

Further, a large excess of unsubstituted oxyethylene units is to be avoided, as such excess units tend to cause the polymer to be swellable. As water is taken up, the oxygen permeability of such polymers tends to be drastically reduced. Advantageously, the instant polymers absorb less than about 10 % by weight water, preferably less than about 5 % by weight, most preferably less than 3 % by weight water.

Highly preferred are those polymers which exhibit a contact angle of less than 25°, more preferably less than 15° and most preferably less than 10°.

Preferred crosslinked polymers are those consisting essentially of a polymer of a divinylic monomer according to formula II wherein $R^1$ and $R^2$ are methyl, (x4+x5) times x6 is 2 - 20; A is of formula XI, b, d and f are zero; $R^{14}$, $R^{20}$ and $R^{26}$ are independently alkyl of up to 8 carbon atoms, (x+y+z) multiplied by q is 4 - 40 and P′ is:

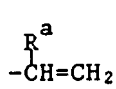

with $R^a$ being hydrogen or methyl.

Very highly advantageous are those polymers of reactive vinylic monomers of the formula XIV,

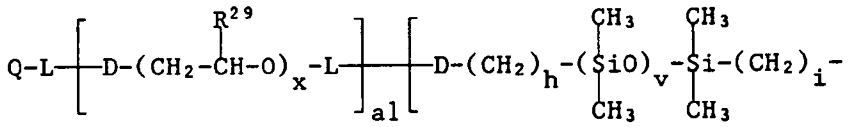

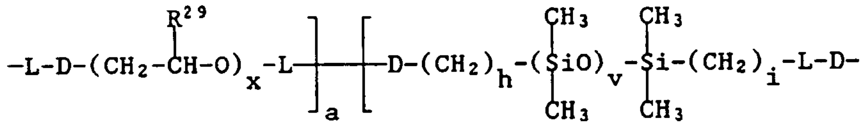

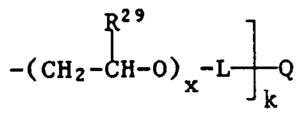

(XIV)

where Q is

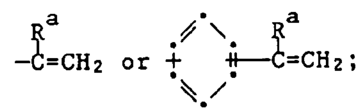

one of a1 and k is one and the other zero; $R^a$ is hydrogen or methyl;
each G within L is a divalent arylene group of 6 to 15 carbon atoms, a divalent $C_6$-$C_{10}$-arylene-amino carbonyloxy-$C_2$-$C_6$ alkylene;
or divalent $C_3$-$C_{15}$ cycloaliphatic;
B and B′ are each

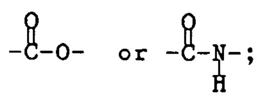

each $R^{29}$ is alkyl of 1 to 6 carbon atoms, or mixtures thereof with units wherein $R^{29}$ is hydrogen, preferably with the proviso that $R^{29}$ can be hydrogen in no more than about 75 %, more preferably 50 %, still more preferably no more than 30%, of the units;
each x is 6-200, preferably 4 - 75, more preferably 6 - 70, most preferably 8 - 66; v is 2 - 66, preferably 2 - 25, more preferably 2 - 20; i and h are independently 2, 3 or 4; and a is an integer of 1 - 10, preferably 1 - 8, more preferably 1 - 6, still more preferably 1 - 4, most preferably 1 - 2.

Within this very highly advantageous embodiment, $R^a$ is most preferably methyl; G is most preferably -phenylene-, $-CH_2CH_2OCONH$-phenylene- or $-CH_2CH_2OCONH$-tolylene-; $R^{29}$ is methyl, x is most preferably 60 to 66; v is most preferably 15 to 20; a is most preferably 1 to 3; k is most preferably zero; and a1 is most preferably one.

Within this embodiment preferably Q is

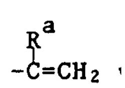

wherein $R^a$ is methyl,
L is -BG- or -GB- wherein G is -phenylene- and B is -NHCO-,
D is oxygen or a bond, $R^{29}$ is methyl, x is 60 to 66, h and i are each 2,
v is 15 to 20, a1 is one , k is zero, and a is 1 to 3.

A very highly preferred embodiment are those polymers from monomers of formula XIV wherein each

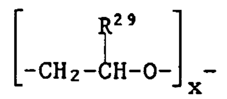

group is of the formula

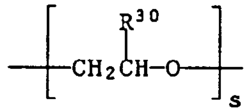

where $R^{30}$ is alkyl of 1 to 4 carbon atoms, most preferably methyl, and s is from about 6 to about 200, preferably from about 25 to about 100, and most preferably from about 50 to about 75.

Also highly preferred are those polymers of monomers of formula XIV wherein each

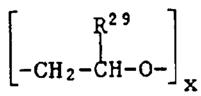

group is of the formula XV

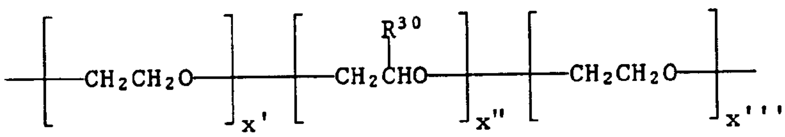 (XV)

wherein x′ is from about 2 to about 20, x″ is from about 8 to about 100, and x‴ from about 4 to about 80. Another valuable embodiment requires the value of x″ to be at least about twice that of x′ or x‴ and $R^{30}$ to be alkyl of 1 to 4 carbon atoms, preferably methyl.

The reactive vinylic monomers of formula II can characteristically be polymerized to form crosslinked polymers under conventional polymerization conditions.

If desired, the monomer reaction mixture may contain a catalytic amount of a conventional polymerization catalyst, preferably a free radical catalyst. Of particular interest are conventional peroxide and azo catalysts, such as hydrogen peroxide, benzoyl peroxide, tert-butyl peroctoate, benzoyl peroxide or azobis(isobutyronitrile).

The polymerization can generally be carried out at temperatures between about 20° and about 150°C, for a period between about 1 and about 24 hours. It is understood that the time and temperature in such a reaction are inversely related. Thus, temperatures employed in the upper end of the temperature range will generally provide reaction times near the lower end of the time range. Preferably, the polymerization is conducted in the presence of actinic radiation, such as UV light.

Depending upon the nature of the polymer mixture, it may be desirable for the polymers obtained from such polymerizations to be post cured, e.g. at a somewhat elevated temperature such as between about 60°C and about 150°C.

For the preparation of contact lenses, the polymer mixture may be cast directly in the shape of the lens, or the polymerization may be carried out in a mold having a shape convenient for further processing, such as in the shape of small cyclinders or "buttons", which can then be machined.

Minor amounts i.e. less than 50 %, preferably up to 30 %, and most preferably up to no more than about 10 % by weight, of conventional copolymerizable vinyl monomers can be employed as extenders or hydrophilic modifiers or the like, in the preparation of the instant polymer, as copolymer constituents. Suitable vinyl monomers include:

acrylates and methacrylates of the general formula

$$H_2C=C(R^{31})-COOR^{32}$$

where $R^{31}$ is hydrogen or methyl and $R^{32}$ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or $C_3$-$C_5$ polyalkyleneoxy of 2 to about 100 units;
acrylamides and methacrylamides of the general formula

$$H_2C=C(R^{31})-CONHR^{32}$$

where $R^{31}$ and $R^{32}$ are as defined above;
vinyl ethers of the formula

$$H_2C=CH-O-R^{32}$$

where $R^{32}$ is as defined above;
vinyl esters of the formula

$$H_2C=CH-OOC-R^{32}$$

where $R^{32}$ is as defined above;
maleates and fumarates of the formula

$$R^{32}OOC-HC=CH-COOR^{32}$$

where $R^{32}$ is as defined above;
and vinylic substituted hydrocarbons of the formula

$$R^{31}CH=CHR^{32}$$

where $R^{31}$ and $R^{32}$ are as defined above.

Useful monomers include, for example:
methyl-, ethyl-, propyl-, isopropyl-, butyl-, ethoxyethyl-, methoxyethyl-, ethoxypropyl-, phenyl-, benzyl-, cyclohexyl-, hexafluoroisopropyl-, or n-octyl-acrylates and -methacrylates as well as the corresponding acrylamides and methacrylamides:
dimethylfumarate, dimethylmaleate, diethylfumarate, methyl vinyl ether, ethoxyethyl vinyl ether, vinyl acetate, vinyl propionate, vinyl benzoate, acrylonitrile, styrene, alphamethyl styrene, 1-hexene, vinyl chloride, vinyl methyl ketone, vinyl stearate, 2-hexene and 2-ethylhexyl methacrylate.

As hydrophilic modifiers, to increase hydrophilicity without substantial loss of Dk, the vinyl comonomer can be a N-(vinyl containing group)-pyrrolidone or a polyoxyethylene (of 1-25 repeating units) acrylate or methacrylate or a monomer defined in copending US Patent application entitled HYDROPHOLIC MODIFIER MONOMERS, by inventors Frank Molock, Richard Robertson and Kai Su. Such a hydrophilic modifier should not be present in excess of about 10 % by weight of the compound of formula II.

Most preferably, the instant polymers are free from copolymer units of such conventional vinyl monomers.

The vinylic monomers of formula II can be prepared by methods known, per se.

For example, the siloxane/polyalkylene oxide containing divinylic monomers of formula II may be prepared by reacting a siloxane of the formula H-(S′)-H, wherein -S′- is a group of the formula I as defined hereinbefore with a sufficient amount of a difunctional reactive group containing compound having the group -X- or -X-Y-, wherein the difunctional reactive groups are isocyanate; activated carboxy, such as an anhydride, an acid halide or a carboxy ester; or is a leaving group, such as a halide, sulfato or the like, to form the corresponding reactive group containing endcapped derivative.

The resulting endcapped siloxane derivative can then be reacted with a polyoxyalkylene diol of the formula HO-(A)-H, wherein -A- is a group of the formula X above to form the corresponding polyoxyalkylene-siloxane-polyoxyalkylene diol. This diol can then be reacted with a reactive group containing vinylic monomer having the terminal $H_2C=C(R^a)$-L-moiety, wherein the reactive group is an isocyanate; activated carboxy, such as an anhydride, an acid halide or carboxy ester, or is a leaving group such as halo, sulfato or the like to form the corresponding divinyl derivative where a is 1. Alternatively, the aforementioned polyoxyalkylene - siloxane - polyoxyalkylene diols can be further sequentially reacted with a further difunctional reactive group containing compound having the group -BG- or -BGB′-D- to form the corresponding di-functional reactive endcapped derivative which is then reacted with a siloxane of the formula H-(S′)-H. One may continue building up alternative polyoxyalkylene/siloxane unit containing diols in this manner, corresponding to the value of the member of repeating groups. Then this may be endcapped with a reactive group containing vinylic monomer having a ter-

minal $H_2C=C(R^a)$-L-moiety or reacted with a sufficient amount of difunctional reactive group containing compound to endcap it with a reactive group, such as eg. an isocyanate, etc. group which is then reacted with the appropriate vinylic containing compound, such as a vinylic amine or alcohol, or other copolymerizable monomer having a crosslinkable group to obtain the corresponding product of formula II.

Of course, instead of starting with a siloxane of the formula H-(S')-H and building up the alternating sequence to the desired value of "a", one may instead begin with a polyoxyalkylene diol of the formula HO-(A)-H and, after endcapping the same with difunctional reactive groups, condense the same with the siloxane until the desired value is attained, and terminate it with vinylic groups as described above.

The above reactive vinylic monomers are characteristically polymerized under conventional polymerization conditions. In those vinylic monomers containing but one vinyl group, a minor amount e.g. from about 0.01 to about 5 weight percent, based on the monomer of formula II, of a conventional crosslinking agent, may be employed. Suitable crosslinking agents include diolefinic monomers such as:

Allyl acrylate and methacrylate, alkylene glycol and polyalkylene glycol diacrylates and dimethacrylates, such as ethyleneglycol dimethacrylate, diethylene glycol dimethacrylate, and propylene glycol dimethacrylate; trimethylol propane triacrylate; pentaerythritol tetraacrylate, divinylbenzene; divinyl ether; divinyl sulfone; bisphenol A diacrylate or dimethacrylate; methylene bisacrylamide; diallyl phthalate; triallyl melamine and hexamethylene diacrylate and dimethacrylate. Also, such minor amounts of a crosslinking agent may be employed, if desired, in the polymerization of the di-vinyl monomer of formula II and XIV.

When the monomers of formula II have free hydroxy, isocyanato, carboxylic or amine groups, suitable crosslinking agents contain di-or polyfunctional co-reactive groups to form addition or condensation reactions linking 2 or more chains.

If desired, the monomer reaction mixture may contain a catalytic amount of a conventional catalyst, preferably a free radical catalyst. Of particular interest are conventional peroxide and azo catalysts, such as hydrogen peroxide, benzoyl peroxide, tert-butyl peroctoate, benzoyl peroxide or azobis (isobutyronitrile).

The aforementioned reactions are generally straight forward additions or condensations and are typically conducted at a reaction temperature between about -10°C and about 100°C, depending upon the relative reactivity of the species involved, in the presence or absence of an inert diluent and in the optional presence of an addition or condensation catalyst if desired or appropriate. For reactions involving an isocyanate or acid halide, with a diol, for example, suitable optional catalysts include pyridine and triethylamine.

Some of the siloxane of the formula H-(S')-H are known in the art and many are commercially readily available.

Also, the polyoxyalkylene diols of the formula HO-A-H are known or can be prepared by known methods.

Thus, the polyols of the formula HO-A-H are generally prepared by the addition reaction of xq moles of an epoxide of the formula XVI,

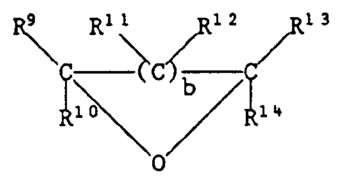

(XVI)

where $R^9$-$R^{14}$ b, x, and q are as defined above, with yq moles of an epoxide of the formula XVII,

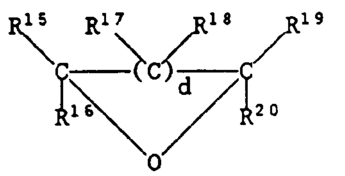

(XVII)

where $R^{15}$-$R^{20}$, d, y, and q are as defined above, and zq moles of an epoxide of the formula XVIII,

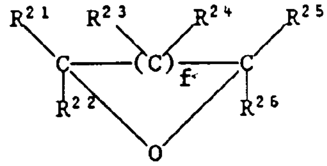

(XVIII)

wherein $R^{21}$-$R^{26}$, f, z, and q are as defined above, optionally in the presence of a conventional alkylation catalyst, at atmospheric to elevated pressures of up to about 3000 kpa gauge, at temperatures between 0°C and about 130°C, optionally in the presence of an inert diluent. If desired, one may add to the reaction mixture, prior to the reaction of the epoxides, an aliphatic, aromatic or cycloaliphatic alcohol, acid or amine having up to 14 carbon atoms to prepare the corresponding mono-ols terminating in the group D.

The reaction between the epoxides, when mixtures of different epoxides are employed to obtain the polyol of the formula HO-A-H, can be conducted by admixing the epoxides to obtain random copolymers or terpolymers, etc., or the addition can be conducted sequentially to form block copolymers having terminal hydroxy groups. Suitable catalysts include alkaline earth oxides, alkaline earth carbonates, alkyl zinc compounds, aluminum alkoxides, hydrates of ferric chloride, bromide and acetate, and gamma radiation. The reaction may also be initiated by the presence of a glycol, such as ethylene glycol or propylene glycol or by a polyol of higher functionality such as sucrose, or by an amine, such as ethylene diamine, toluenediamine, and so forth. Generally the length of time of the reaction will depend in part on the alkylene oxide employed, but can generally be from less than one to several score hours. Thus, ethylene oxide generally is about three times as active as propylene oxide, which in turn reacts more rapidly than 1,2-butylene oxide. The preparation of polyoxetanes and polytetrahydrofurans is generally initiated via ring opening oxonium formation using trialkyloxonium salts, carboxonium salts, acylium salts and the like.

Suitable diols of the formula HO-A-H include those prepared from epoxides such as:
1,2-propylene oxide; 1,2-butylene oxide; 1,2-epoxydecane; 1,2-epoxydodecane; 1,2-epoxyoctane; 2,3-epoxynorbornane; 1,2-epoxy-3-ethoxypropane; 1,2-epoxy-3-phenoxypropane; 2,3-epoxypropyl 4-methoxyphenyl ether; tetrahydrofuran; 1,2-epoxy-3-cyclohexyloxypropane; oxetane; 1,2-epoxy-5-hexene; 1,2-epoxyethylbenzene; 1,2-epoxy-1-methoxy-2-methylpropane; perfluorohexylethoxypropylene oxide; benzyloxypropylene oxide, and the like. Also, the aforementioned epoxides may be employed as mixtures thereof. Further, certain cyclic ethers of formula XVI, XVII, or XVIII where b or d or f, respectively is 3 and the carbocyclic portion of the ring is substituted are resistant to polymerization alone, but copolymerize quite readily with more reactive cyclic ethers. Suitable co-monomers include, for example, 2-methyl-tetrahydrofuran and 3-methyl-tetrahydrofuran. Also, while ethylene oxide may be employed as a co-monomer, ethylene oxide polymers, in the absence of more hydrophobic units, is characteristically too hydrophilic and absorbs too much aqueous fluid to be of use in accordance with the instant invention. However, ethylene oxide/propylene oxide copolymeric diols wherein there is 30-80 %, preferably greater than 50 %, more preferably greater than 66 % propylene oxide, on a mole basis, is sufficiently hydrophobic so as to be substantially non-swellable in aqueous media, and yet sufficiently hydrophilic so as to exhibit a contact angle with water of less than 60°; preferably less than 40°, more preferably less than 25°, more preferably less than 15°, most preferably less than 10°.

Many polymer diols of the formula HO-A-H are commercially available. Thus, suitable diol products include poloxamers having the general formula

$$HO(CH_2CH_2O)_{a'}\text{-}(CH(CH_3)CH_2O)_{b'}\text{-}(CH_2CH_2O)_{c'}\text{-}H$$

wherein b′ has a value between about 16 and 100 and the sum of a′ and c′ is between about 4 and about 100. Examples of such poloxamers, and their average values of a′, b′ and c′, include poloxamer 101 (a′ is 2, b′ is 16, c′ is 2); poloxamer 122 (a′ is 5, b′ is 21, c′ is 5); poloxamer 181 (a′ is 3, b′ is 30, c′ is 3); poloxamer 212 (a′ is 8, b′ is 35, c′ is 8); poloxamer 231 (a′ is 6, b′ is 39, c′ is 6); poloxamer 282 (a′ is 10, b′ is 47, c′ is 10); poloxamer 333 (a′ is 7, b′ is 54, c′ is 7); poloxamer 401 (a′ is 6, b′ is 67, c′ is 6).

Such poloxamers are available, e.g. from BASF Wyandotte under their Pluronic® brand name. Also suitable are the "reverse poloxamers", having polyethylene glycol bounded on each side by polypropylene glycol.

Polypropylene ether glycols include commercially available products having a molecular weight range between about 400 and about 4,000.

Monomers having the group of the formula IV, terminated on each side with hydrogen can generally be formulated as follows:

( x+1) moles of

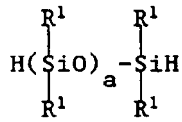

added to x moles of

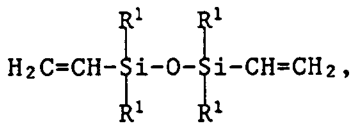

in the presence of Speiers catalyst yields

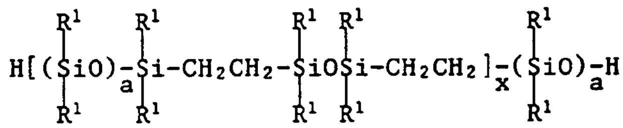

Modifications thereof to obtain specific monomers having the group of formula IV are well known in the art. Of the above, when a is 11, x is 2 and each $R^1$ is methyl, the resulting monomer is commercially available. Another commercially available monomer is

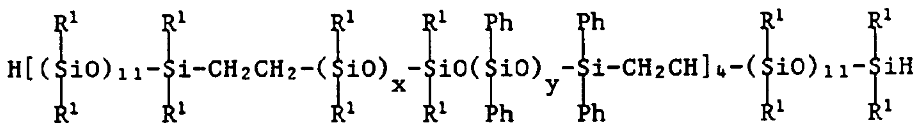

wherein each $R^1$ is methyl and each Ph is phenyl which is the result of reacting

5 moles of

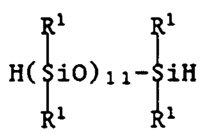

with

4 moles of

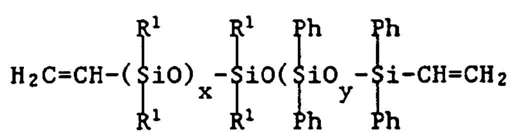

wherein (x + 1) is 83-85 % and (y + 1) is 17-15 % of the silicon atoms in the divinyl siloxane.

Monomers having the group of formula V, the free valences thereof being bonded e.g. to hydrogen, can be readily prepared as follows:

Beginning with a siloxane of the formula

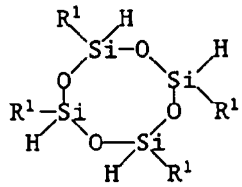

in which $R^1$ is methyl or phenyl, one reacts 1 mole of this compound with 2 moles of a styrene in the presence of Speiers catalyst to obtain replacement of two hydrogens with phenethyl groups, i.e. the compound of the formula

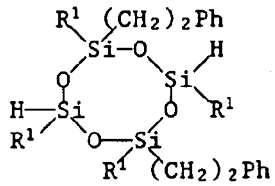

Ph being phenyl. These compounds can then be reacted with 2 moles of a divinyl benzene in the presence of Speiers catalyst to replace the two remaining hydrogens (on the silicon atoms) with 2-(p-styryl)ethyl groups. This distyryl terminated group can then be used to link other siloxane hydrides or copolymerize with other copolymerizable groups, especially vinyl monomers. Groups other than phenethyl can be introduced by means known in the art. The compounds of siloxane rings of six ring members can be prepared analogously.

The 6 and 8 membered tri and tetrahydride siloxanes are readily available commercially of their preparation is well known in the art.

As stated above, the polymers for use in the instant invention are those which exhibit a receding contact angle at 20°C of less than 60°, preferably less than 40°, more preferably less than 25°, more preferably less than 15° and most preferably less than 10°. The measurement of such contact angle is conveniently performed using a modified "Wilhelmy Plate" technique, as described, for example, for J.D. Androde, et al. Surface and Interfacial Aspects of Biomedical Polymers, Vol. 1, Surface Chemistry and Physics, Plenum Press, 1985, wherein a specimen sample in the form of a plate of known dimensions is immersed into the wetting solution, pure water, at a slow controlled rate, e.g. at 2 - 20 mm per minute.

As mentioned above, the instant polymers for use in the present invention possess a high degree of oxygen permeability. The oxygen permeability, Dk($x10^{-10}$), is measured using a modification of ASTM standard D3985-81 in that (a) there is used 21 % oxygen, i.e. air, instead of 99 - 100 % oxygen, (b) the surface area of sample employed is 0.50 square meters versus 100 square meters and the humidity is controlled to be at 95 - 100 % relative humidity instead of 0 % relative humidity. The unit of Dk is (mm·ml $O_2$/$cm^2$·sec·mmHg).

Typically, conventional fully swollen polyhydroxyethyl methacrylate lenses which are sparingly crosslinked possess a Dk($x10^{-10}$), (mm·ml $O_2$/$cm^2$·sec·mmHg) value of about 5 - 7.

The instant polymers for use as an ophthalmic device, such as a contact lens, possess a Dk($x10^{-10}$) value generally greater than 7, preferably greater than about 15, more preferably greater than about 20 and most preferably greater than about 40.

The following examples are for illustrative purposes and are not to be construed as limiting the invention. All parts are by weight unless otherwise specified.

Examples 1 - 2: Hydrophilic Precursor Preparation

Using the following procedure, Examples 1 and 2 are prepared with the components outlined in Table I. To a 500 ml, 3-necked flask fitted with a constant pressure dropping funnel, condensor and nitrogen inlet and outlet adapters are charged all the styrene isocyanate, catalyst and 80 % of methylene chloride. To the dropping funnel is added all the diol and 20 percent of the methylene chloride. The reaction system is sealed under nitrogen atmosphere, stirred magnetically and the contents of the dropping funnel added dropwise. After 18 hours the reaction is monitored via FT-infrared spectroscopy to insure that all the isocyanate band disappeared. Syntheses and analyses data for each example are shown in Tables I and II.

Table I

Synthesis Information for Examples 1 and 2

| Example | Diol (g) | Styrene Isocyanate | Stannous Octoate | Methylene Chloride |
|---|---|---|---|---|
| 1 | Poly(propylene glycol) 425, 70.54 | 49.64 g | 0.64 g | 150 ml |
| 2 | Poly(propylene glycol) 725, 108.07 | 43.53 g | 0.79 g | 150 ml |

Table II

Analytical Data for Examples 1 and 2

| Example | GPC MWN | GPC MWW | GPC Polydispersity | Visual Appearance |
|---|---|---|---|---|
| 1 | 885 | 913 | 1.032 | Clear/faint yellow tint |
| 2 | 1350 | 1395 | 1.034 | Clear/colorless |

Example 3: Silicone Block Copolymer Synthesis:

To a 250 ml, 3-necked flask equipped with a condenser, constant pressure dropping funnel and nitrogen inlet and outlet adapters are added 36.30 g (0.051 moles) styryl capped poly(propylene glycol) precursor (example 1) and 100 ml methylene chloride. The mixture is stirred magnetically, heated to 39°C and 21.43 g (0.024 moles) of a hydride terminated silicone mixed with 0.65 g Speiers catalyst and 30 ml methylene chloride are added dropwise via the dropping funnel under nitrogen atmosphere. After 24 hours, FT-infrared spectroscopy indicates the hydride band has disasppeared. The reaction product is diluted with 100 ml methylene chloride, charged with sodium carbonate and carbon black, stirred 2 hours, filtered twice and the solvent removed via rotary evaporation. The product is clear, viscous fluid.

Examples 4-17: Formulations of the silicone block copolymer described in example 3 are prepared with various concentrations of styrene, methylmethacrylate (MMA), divinylbenzene (DVB), ethylene glycol dimethacrylate (EGDMA), N,N-dimethylacrylamide (DMA), 2-hydroxyethylmethacrylate (HEMA) and N-vinylpyrrolidone (NVP). 0.2 % 2-hydroxy-2-methyl-1-phenylpropan-1-one is added to each formulation with MMA and 0.2 % Vazo 52 (Dupont) is added to each formulation with styrene. The formulations are stirred and protected from light until the bubbles caused by stirring have escaped. The MMA formulations are transferred to polypropylene molds and cured four hours in ultra-violet light. The styrene formulations are transferred to polypropylene molds and cured thermally (65°C for 24 hours. Each formulation composition, shore D and clarity are shown in Table III. Note the formulations are given as weight percentages.

Table III

Physical Data

| Ex. | Silicone Block Copolymer | Styrene | MMA | DVB | EGDMA | DMA | HEMA | NVP | Shore D | Clarity |
|---|---|---|---|---|---|---|---|---|---|---|
| 4 | 20 | 72.8 | - | 2 | - | 5 | - | - | 74 | Opaque |
| 5 | 30 | 62.8 | - | 2 | - | 5 | - | - | 70 | Hazy |
| 6 | 40 | 52.8 | - | 2 | - | 5 | - | - | 65 | Hazy |
| 7 | 20 | - | 72.8 | - | 2 | 5 | - | - | 85 | Clear |
| 8 | 30 | - | 62.8 | - | 2 | 5 | - | - | 83 | Clear |
| 9 | 40 | - | 52.8 | - | 2 | 5 | - | - | 79 | Clear |
| 10 | 30 | 62.8 | - | - | 2 | 5 | - | - | 73 | Hazy |
| 11 | 30 | 62.8 | - | - | 2 | - | 5 | - | 65 | Hazy |
| 12 | 30 | 62.8 | - | - | 2 | - | - | 5 | 45 | Hazy |
| 13 | 30 | - | 62.8 | 2 | - | 5 | - | - | 81 | Clear |
| 14 | 30 | - | 62.8 | 2 | - | - | 5 | - | 83 | Clear |
| 15 | 30 | - | 62.8 | 2 | - | - | - | 5 | 83 | Clear |
| 16 | 30 | 69.8 | - | - | - | - | - | - | 55 | Hazy |
| 17 | 30 | - | 69.8 | - | - | - | - | - | 83 | Clear |

Example 18: Silicone Block Copolymer Synthesis:

To a 250 ml, 3-necked flask equipped with a condenser, constant pressure dropping funnel and nitrogen inlet and outlet adapters are added 45.70 g (0.024 moles) styryl capped poly(propylene glycol) precursor (example 2) and 100 ml methylene chloride. The mixture is stirred magnetically, heated to 39°C and 18.69 g (0.021 moles) of a hydride terminated silicone mixed 0.65 g Speiers catalyst and 30 ml methylene chloride are added dropwise via the dropping funnel under nitrogen atmosphere. After 24 hours, FT-infrared spectroscopy indicates the hydride band disappeared. The reaction product is diluted with 100 ml methlene chloride, charged with sodium carbonate and carbon black, stirred 2 hours, filtered twice and the solvent removed via rotary evaporation. The product is clear, viscous fluid.

Examples 19-32: Formulations of the silicone block copolymer described in example 18 are prepared with various concentrations of styrene, methylmethacrylate (MMA), divinylbenzene (DVB), ethylene glycol dimethacrylate (EGDMA), N,N-dimethylacrylamide (DMA), 2-hydroxyethylmethacrylate (HEMA) and N-vinylpyrrolidone (NVP). 0.2 % 2-hydroxy-2-methyl-1-phenylpropan-1-one is added to each formulation with MMA and 0.2 % Vazo 52 (Dupont) is added to each formulation with styrene. The formulations are stirred and protected from light until the bubbles caused by stirring have escaped. The MMA formulations are transferred to polypropylene molds and cured four hours in ultra-violet light. The styrene formulations are transferred to polypropylene molds and cured thermally (65°C) for 24 hours. Each formulation composition, shore D and clarity are shown in Table IV. Note the formulations are given as weight percentages.

Table IV

Physical Data

| Ex. | Silicone Block Copolymer | Styrene | MMA | DVB | EGDMA | DMA | HEMA | NVP | Shore D | Clarity |
|---|---|---|---|---|---|---|---|---|---|---|
| 19 | 20 | 72.8 | - | 2 | - | 5 | - | - | 55 | Opaque |
| 20 | 30 | 62.8 | - | 2 | - | 5 | - | - | 60 | Hazy |
| 21 | 40 | 52.8 | - | 2 | - | 5 | - | - | 55 | Hazy |
| 22 | 20 | - | 72.8 | - | 2 | 5 | - | - | 87 | Clear |
| 23 | 30 | - | 62.8 | - | 2 | 5 | - | - | 85 | Clear |
| 24 | 40 | - | 52.8 | - | 2 | 5 | - | - | 83 | Clear |
| 25 | 30 | 62.8 | - | - | 2 | 5 | - | - | 62 | Hazy |
| 26 | 30 | 62.8 | - | - | 2 | - | 5 | - | 65 | Hazy |
| 27 | 30 | 62.8 | - | - | 2 | - | - | 5 | 15 | Hazy |
| 28 | 30 | - | 62.8 | 2 | - | 5 | - | - | 82 | Clear |
| 29 | 30 | - | 62.8 | 2 | - | - | 5 | - | 83 | Clear |
| 30 | 30 | - | 62.8 | 2 | - | - | - | 5 | 83 | Clear |
| 31 | 30 | 69.8 | - | - | - | - | - | - | 5 | Hazy |
| 32 | 30 | - | 69.8 | - | - | - | - | - | 83 | Clear |

## Claims

**Claims for the following Contracting States : AT, BE, CH, DE, FR, GB, GR, IT, LI, LU, NL, SE**

**1.** An optically clear, wettable, substantially non swellable in an aqueous environment, oxygen permeable crosslinked polymer having units S′ of the formula

$$-L4-(A1)_{x1}-(B2A2)_{x2}-(B1)_{x3}-L5- \qquad (I)$$

in which x1 and x3 are each independently an integer from zero to 25; x2 is an integer from 1 to 25; and each of A1, A2, B1 and B2 is independently selected from
a) linear siloxanes of the formula

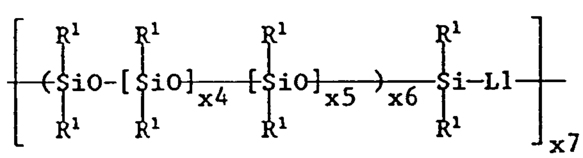

(IV)

and b) cyclic siloxanes of the formula

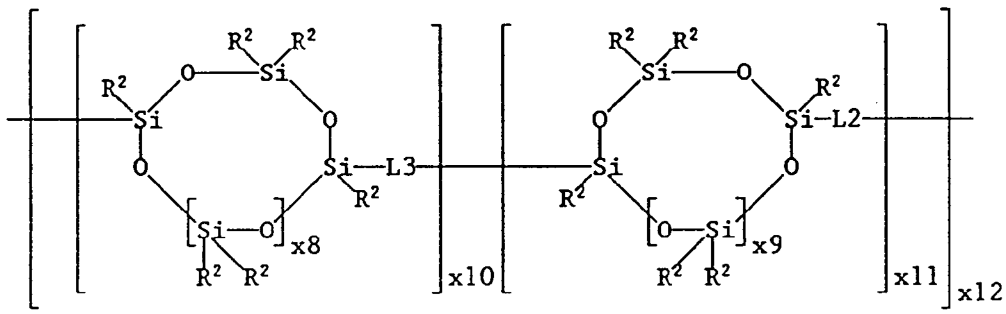

(V)

provided that A1 is not the same as B2 and B1 is not the same as A2 and B2 and A2 are not the same; further provided that at least one of A1, A2, B1 and B2 is of formula (V);
in which each $R^1$ may be the same or different;
each $R^2$ may be the same or different;
each of x4, x5, x6 and x10 is independently zero to 25;
each of x7, x11 and x12 is independently 1 to 25;
each of x8 and x9 is independently zero or one;
each of $R^1$ and $R^2$ is independently selected from
aa) $C_{1-18}$ alkyl and aryl of up to 12 carbon atoms, each of which is unsubstituted or substituted by halogen or by $C_{1-4}$ alkyl,
ab) halogen; and
ac) a group of the formula

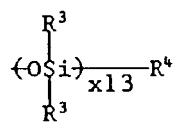

(VI)

wherein each $R^3$ is independently $C_{1-14}$ alkyl, $-OSi(R^5)_3$, or $C_{6-12}$ aryl, with each $R^5$ and $R^4$ independently selected from $C_{1-4}$ alkyl, $C_{6-12}$ aryl, epoxy, halogen, hydroxy $C_{1-4}$ alkyl, amino, amino $C_{1-4}$ alkyl, hydroxy, isocyana to and isothiocyanato; and x13 is 1 to 12, preferably 1 to 5;
L3 is a linking group of the formula

$$-W-(G-W)_{a3}- \qquad (VII)$$

wherein a3 is zero or one;
each W is selected from

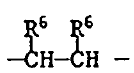

and -O-, when a3 is zero or one,
and further from

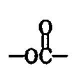 and 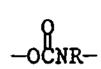

when a3 is one;
and in which the atom of W bonded to a silicon atom is either a saturated carbon atom or an oxygen atom, and each $R^6$ is independently hydrogen or lower alkyl;
L1 and L2 are each selected from
ba) a group of formula VII when linking 2 silicon atoms and
bb) a group of the formula

$$-W-(G-J)_{a4}- \qquad (VIII)$$

when not linking two silicon atoms and W is bound to a silicon atom, in which a4 is zero or one; W is as defined hereinbefore;

and J is selected from a bond,

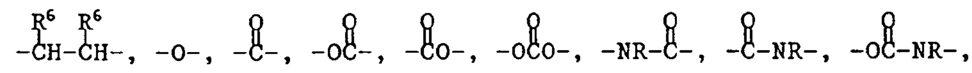

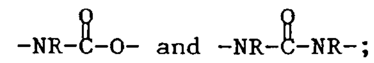

L4 is independently selected from a bond and groups of formula VII and VIII;
L5 is independently selected from a bond and groups of formula VII and VIII;
G is selected from the group of

i) a divalent, aliphatic linking group of up to 25 carbon atoms which may be interrupted by an interrupting unit selected from

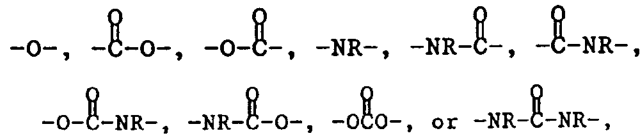

and which divalent groups may be substituted by lower alkyl;

ii) a divalent 5-7 membered cycloaliphatic, a divalent 5-7 membered cycloaliphatic-$C_{1-18}$ aliphatic, and a divalent $C_{1-18}$ aliphatic-5-7 membered cycloaliphatic-$C_{1-18}$ aliphatic group, each of which may be interrupted in the non cyclic portion or between the cyclic and noncyclic portions thereof by an interrupting unit or substituted by a substituent or both interrupted and substituted as set forth in i) above;

iii) a divalent $C_{6-25}$ arylene which is unsubstituted or substituted by a substituent selected from halogen, $C_{1-4}$ alkyl, $C_{1-12}$ perhaloalkyl, amino, carboxy, $C_{1-4}$ alkoxy carbonyl, amino carbonyl, $C_{1-4}$ alkylaminocarbonyl, di($C_{1-4}$ alkyl) amino carbonyl and a polyglycol of the formula

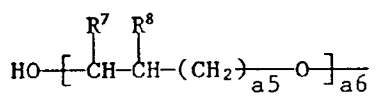 (IX)

wherein a5 is zero or one;
one of $R^7$ and $R^8$ is hydrogen and the other is methyl or hydrogen when a5 is zero; and both $R^7$ and $R^8$ are hydrogen when a5 is one;
and a6 is an integer of up to 60;

iv) a divalent aralkyl or alkaryl, having 7-25 carbon atoms, each of which may be interrupted in the alkyl portion or between the alkyl and aryl portions by an interrupting group set forth in i) above, and each of said uninterrupted and interrupted aralkyl and alkaryl groups is unsubstituted or substituted on the aryl ring as set forth in iii) and/or substituted in the alkyl portion by a substituent set forth in i);

v) a divalent aliphatyl-aryl-aliphatyl wherein the total number of aliphatyl carbon atoms is up to 40, and the aryl portion being $C_{6-14}$, the aliphatyl portions being uninterrupted or interrupted by an interrupting unit set forth in i) above, the aliphatyl-aryl-aliphatyl also being possibly interrupted between one or both of the aliphatyl groups and the aryl group by an interrupting group as set forth in i) above, the aliphatyl groups being unsubstiuted or substitued by a substituent set forth in i) above, and/or the aryl portion being unsubstituted or substituted by a substituent set forth in iii) above.

2. The crosslinked polymer of claim 1 having units S″ of the formula

$$(S'\text{-}L\text{-}D\text{-}A\text{-}L)_a \qquad \text{(III)}$$

wherein S′ is of formula I as defined in claim 1;
a is an integer of from 1-10;
each D is -O- or -NR- with R being hydrogen or lower alkyl, or a bond;
each L is -BGB′-, -BG- or -GB-;

each B and B′ is independently selected from -CO-; -COO-, and -C(O)NR- wherein the carbonyl is bound to L4, L5, D, or A;
G is as defined in claim 1;
each A is independently a segment of formula X,

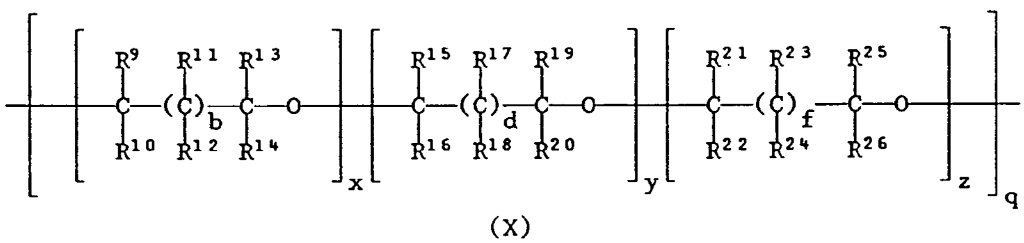

(X)

the terminal oxygen within each unit of formula X being replaceable by -N(R)-;
wherein each b, d and f is independently 0 - 4; q is a number from 1 to 1000; each x, y and z is independently 0 to 100 at least one of x, y and z being at least 1; and (x+y+z) multiplied by q is 4 to 1000;
each of $R^9$, $R^{10}$, $R^{13}$-$R^{16}$, $R^{19}$-$R^{22}$, $R^{25}$ and $R^{26}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl; wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, formyloxy, $C_2$-$C_{16}$ alkanoyloxy, aryloxy of up to 10 carbon atoms, $C_3$-$C_6$ alkenoyloxy, aroyl of up to 11 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being unsubstituted or substituted by $C_1$-$C_6$ alkyl, fluoro or a $C_1$-$C_6$ alkoxy provided said last mentioned alkoxy is not bound to a carbon atom already singly bound to another oxygen atom; $R^9$, $R^{10}$, $R^{13}$-$R^{16}$, $R^{19}$-$R^{22}$, $R^{25}$ and $R^{26}$ being further independently selected from aryl of up to 10 carbon atoms, $C_3$-$C_8$ cycloalkyl, and oxacycloalkyl of up to 7 carbon atoms, each of which are unsubstituted or further substituted with a substituent selected from the group of substituents for said $R^9$ alkyl set forth above;
$R^{11}$, $R^{12}$, $R^{17}$, $R^{18}$, $R^{23}$ and $R^{24}$ are selected from the same groups set forth above for $R^9$; and $R^{11}$, $R^{12}$, $R^{17}$, $R^{18}$, $R^{23}$ and $R^{24}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which are unsubstituted or substituted by fluoro, aryl of up to 10 carbon atoms, or $C_1$-$C_{16}$ alkoxy, and $R^{11}$, $R^{12}$, $R^{17}$, $R^{18}$, $R^{23}$ and $R^{24}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which are unsubstituted or substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^9$-$R^{26}$, together with the atoms to which they are attached may form a 5 - 8 membered cycloalkyl, oxacycloalkyl or bicycloalkyl ring.

3. The polymer of claim 2 which is a polymer of a monomer of the formula

$$L'\text{-}(D\text{-}A\text{-}L)_{a1}\text{—}(S'')_{c}\text{—}(S'\text{-}L''')_{a2}\text{—}L'' \qquad (II)$$

in which one of a1 and a2 is zero and the other is one;
S″, D, A, S′ and L are as defined in claim 1 or 2;
c is 1 to 10, but a times c is 1-10;
L‴ is a bond or -G-;
L′ and L″ are each H or a polymerizable functional group selected from P′-, P′-B-, P′-BG-, P′-GB- and P′-BGB′-, wherein B, G, B′ are all as defined in claim 1 or 2;

and P′ is an ethylenically unsaturated group, amino, hydroxy, isocyanato, isothiocyanato, carboxy, carboxylic acid anhydride, carboxylic acid halide, epoxy, or other copolymerizable or crosslinkable group.

4. The polymer of claim 3 which is a copolymer of the monomer of formula II and a copolymerizable monomer.

5. An ophthalmic device of a polymer of claim 1.

6. An ophthalmic device of a polymer of claim 2.

7. An ophthalmic device of a polymer of claim 3.

8. An ophthalmic device of a polymer of claim 4.

9. The device of claim 5 which is a contact lens.

10. The device of claim 6 which is a contact lens.

11. The device of claim 7 which is a contact lens.

12. The device of claim 8 which is a contact lens.

**Claims for the following Contracting State : ES**

1. A process for the manufacture of an optically clear, wettable, substantially non swellable in an aqueous environment, oxygen permeable crosslinked polymer having units S′ of the formula

$$-L4-(A1)_{x1}-(B2A2)_{x2}-(B1)_{x3}-L5- \quad (I)$$

in which x1 and x3 are each independently an integer from zero to 25;
x2 is an integer from 1 to 25;
and each of A1, A2, B1 and B2 is independently selected from
a) linear siloxanes of the formula

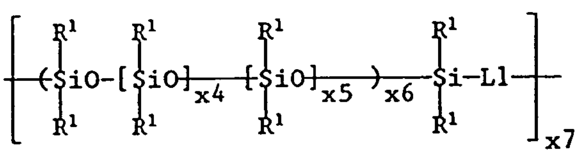

(IV)

and b) cyclic siloxanes of the formula

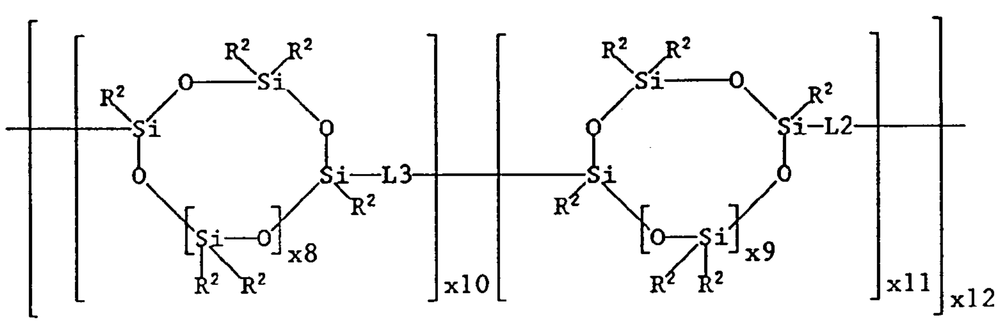

(V)

provided that A1 is not the same as B2 and B1 is not the same as A2 and B2 and A2 are not the same;
further provided that at least one of A1, A2, B1 and B2 is of formula (V);
in which each $R^1$ may be the same or different;
each $R^2$ may be the same or different;
each of x4, x5, x6 and x10 is independently zero to 25;
each of x7, x11 and x12 is independently 1 to 25;
each of x8 and x9 is independently zero or one;
each of $R^1$ and $R^2$ is independently selected from

aa) $C_{1-18}$ alkyl and aryl of up to 12 carbon atoms, each of which is unsubstituted or substituted by halogen or by $C_{1-4}$ alkyl,
ab) halogen; and
ac) a group of the formula

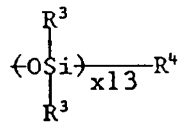 (VI)

wherein each $R^3$ is independently $C_{1-14}$ alkyl, $-OSi(R^5)_3$, or $C_{6-12}$ aryl, with each $R^5$ and $R^4$ independently selected from $C_{1-4}$ alkyl, $C_{6-12}$ aryl, epoxy, halogen, hydroxy $C_{1-4}$ alkyl, amino, amino $C_{1-4}$ alkyl, hydroxy, isocyana to and isothiocyanato; and x13 is 1 to 12, preferably 1 to 5;
L3 is a linking group of the formula

$$-W-(G-W)_{a3}- \quad \text{(VII)}$$

wherein a3 is zero or one;
each W is selected from

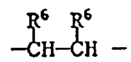

and -O-, when a3 is zero or one, and further from

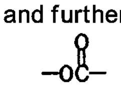 and 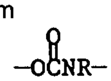

when a3 is one;
and in which the atom of W bonded to a silicon atom is either a saturated carbon atom or an oxygen atom, and each $R^6$ is independently hydrogen or lower alkyl;
L1 and L2 are each selected from
ba) a group of formula VII when linking 2 silicon atoms and
bb) a group of the formula

$$-W-(G-J)_{a4}- \quad \text{(VIII)}$$

when not linking two silicon atoms and W is bound to a silicon atom, in which a4 is zero or one; W is as defined hereinbefore;
and J is selected from a bond,

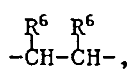, -O-, 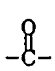, 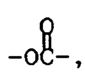, 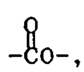, 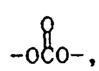, 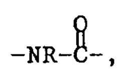, 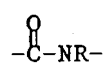, 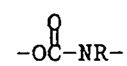,

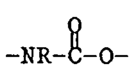 and 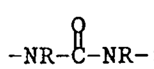;

L4 is independently selected from a bond and groups of formula VII and VIII;
L5 is independently selected from a bond and groups of formula VII and VIII;
G is selected from the group of
i) a divalent, aliphatic linking group of up to 25 carbon atoms which may be interrupted by an interrupting unit selected from

-O-, 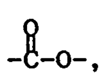, 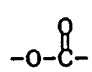, -NR-, 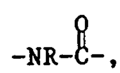, 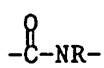,

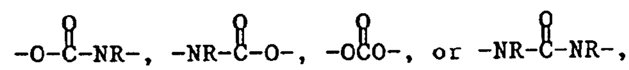

and which divalent groups may be substituted by lower alkyl;

ii) a divalent 5-7 membered cycloaliphatic, a divalent 5-7 membered cycloaliphatic-$C_{1-18}$ aliphatic, and a divalent $C_{1-18}$ aliphatic-5-7 membered cycloaliphatic-$C_{1-18}$ aliphatic group, each of which may be interrupted in the non cyclic portion or between the cyclic and noncyclic portions thereof by an interrupting unit or substituted by a substituent or both interrupted and substituted as set forth in i) above;

iii) a divalent $C_{6-25}$ arylene which is unsubstituted or substituted by a substituent selected from halogen, $C_{1-4}$ alkyl, $C_{1-12}$ perhaloalkyl, amino, carboxy, $C_{1-4}$ alkoxy carbonyl, amino carbonyl, $C_{1-4}$ alkylaminocarbonyl, di($C_{1-4}$ alkyl) amino carbonyl and a polyglycol of the formula

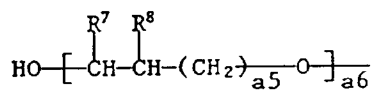 (IX)

wherein a5 is zero or one;

one of $R^7$ and $R^8$ is hydrogen and the other is methyl or hydrogen when a5 is zero; and both $R^7$ and $R^8$ are hydrogen when a5 is one;

and a6 is an integer of up to 60;

iv) a divalent aralkyl or alkaryl, having 7-25 carbon atoms, each of which may be interrupted in the alkyl portion or between the alkyl and aryl portions by an interrupting group set forth in i) above, and each of said uninterrupted and interrupted aralkyl and alkaryl groups is unsubstituted or substituted on the aryl ring as set forth in iii) and/or substituted in the alkyl portion by a substituent set forth in i);

v) a divalent aliphatyl-aryl-aliphatyl wherein the total number of aliphatyl carbon atoms is up to 40, and the aryl portion being $C_{6-14}$, the aliphatyl portions being uninterrupted or interrupted by an interrupting unit set forth in i) above, the aliphatyl-aryl-aliphatyl also being possibly interrupted between one or both of the aliphatyl groups and the aryl group by an interrupting group as set forth in i) above, the aliphatyl groups being unsubstiuted or substitued by a substituent set forth in i) above, and/or the aryl portion being unsubstituted or substituted by a substituent set forth in iii) above; wherein the starting materials are conventionally reacted.

2. A process according to claim 1, wherein the crosslinked polymer of claim 1 has units S″ of the formula

$$\left( S'\text{-}L\text{-}D\text{-}A\text{-}L \right)_a \qquad \text{(III)}$$

wherein S′ is of formula I as defined in claim 1;
a is an integer of from 1-10;
each D is -O- or -NR- with R being hydrogen or lower alkyl, or a bond;
each L is -BGB′-, -BG- or -GB-;
each B and B′ is independently selected from -CO-; -COO-, and -C(O)NR- wherein the carbonyl is bound to L4, L5, D, or A;
G is as defined in claim 1;
each A is independently a segment of formula X,

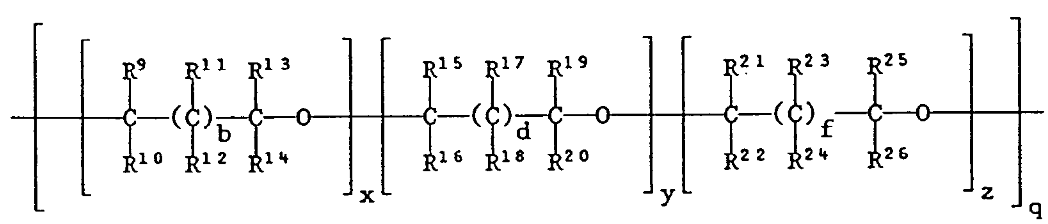

(X)

the terminal oxygen within each unit of formula X being replaceable by -N(R)-;
wherein each b, d and f is independently 0 - 4; q is a number from 1 to 1000; each x, y and z is independently 0 to 100 at least one of x, y and z being at least 1; and (x+y+z) multiplied by q is 4 to 1000; each of $R^9$, $R^{10}$, $R^{13}$-$R^{16}$, $R^{19}$-$R^{22}$, $R^{25}$ and $R^{26}$ is independently selected from the group consisting of hydrogen, halogen, an aliphatic, aromatic or heterocyclic containing radical selected from unsubstituted $C_1$-$C_{16}$ alkyl; substituted $C_1$-$C_{16}$ alkyl; unsubstituted $C_2$-$C_{16}$ alkenyl; and substituted $C_2$-$C_{16}$ alkenyl wherein the alkyl and alkenyl substituents are independently selected from $C_1$-$C_{16}$ alkoxycarbonyl, $C_2$-$C_{16}$ alkenyloxycarbonyl, fluoro, aryl of up to 10 carbon atoms, $C_1$-$C_{16}$ alkoxy, formyloxy, $C_2$-$C_{16}$ alkanoyloxy, aryloxy of up to 10 carbon atoms, $C_3$-$C_6$ alkenoyloxy, aroyl of up to 11 carbon atoms, aroyloxy of up to 11 carbon atoms, $C_3$-$C_8$ cycloalkyl, $C_3$-$C_8$ cycloalkoxy, $C_3$-$C_8$ cycloalkyl-carbonyloxy, $C_3$-$C_8$ cycloalkoxy-carbonyl, oxacycloalkyl of up to 7 carbon atoms, oxacycloalkoxy of up to 7 carbon atoms, oxacycloalkoxy (up to 7 carbon atoms)-carbonyl, oxacycloalkyl (up to 7 carbon atoms)-carbonyloxy, and aryl (of up to 10 carbon atoms)-oxycarbonyl, each of said alkyl and alkenyl substituents being unsubstituted or substituted by $C_1$-$C_6$ alkyl, fluoro or a $C_1$-$C_6$ alkoxy provided said last mentioned alkoxy is not bound to a carbon atom already singly bound to another oxygen atom; $R^9$, $R^{10}$, $R^{13}$-$R^{16}$, $R^{19}$-$R^{22}$, $R^{25}$ and $R^{26}$ being further independently selected from aryl of up to 10 carbon atoms, $C_3$-$C_8$ cycloalkyl, and oxacycloalkyl of up to 7 carbon atoms, each of which are unsubstituted or further substituted with a substituent selected from the group of substituents for said $R^9$ alkyl set forth above;
$R^{11}$, $R^{12}$, $R^{17}$, $R^{18}$, $R^{23}$ and $R^{24}$ are selected from the same groups set forth above for $R^9$; and $R^{11}$, $R^{12}$, $R^{17}$, $R^{18}$, $R^{23}$ and $R^{24}$ are further independently selected from $C_1$-$C_{16}$ alkoxycarbonyl, $C_3$-$C_{16}$ alkenoyloxy, $C_2$-$C_{16}$ alkenyloxycarbonyl, and $C_1$-$C_{16}$ alkanoyloxy, each of which are unsubstituted or substituted by fluoro, aryl of up to 10 carbon atoms, or $C_1$-$C_{16}$ alkoxy, and $R^{11}$, $R^{12}$, $R^{17}$, $R^{18}$, $R^{23}$ and $R^{24}$ are still further independently selected from aryloxy of up to 10 carbon atoms, cycloalkoxy of up to 8 carbon atoms, cycloalkyl (of up to 8 carbon atoms)-carbonyloxy, cycloalkoxy (of up to 8 carbon atoms)-carbonyl, aroyloxy of up to 11 carbon atoms, oxacycloalkoxy of up to 7 carbon atoms, oxacycloalkenyloxy of up to 7 carbon atoms, oxacycloalkoxy (of up to 7 carbon atoms)-carbonyl, oxacycloalkyl (of up to 7 carbon atoms)-carbonyloxy, and aryloxy (of up to 10 carbon atoms)-carbonyl, each of which are unsubstituted or substituted by fluoro, $C_1$-$C_6$ alkyl or $C_1$-$C_6$ alkoxy, provided that any substituent having a singly bound oxygen atom as its link to the rest of the molecule may not be a substituent on the same carbon atom which is singly bonded to another oxygen atom; or 2 adjacent groups, selected from $R^9$-$R^{26}$, together with the atoms to which they are attached may form a 5 - 8 membered cycloalkyl, oxacycloalkyl or bicycloalkyl ring.

**3.** A process according to claim 2 wherein the polymer is a polymer of a monomer of the formula

$$L'\text{-}(D\text{-}A\text{-}L)_{a1}\text{-}(S'')_{c}\text{-}(S'\text{-}L''')_{a2}\text{-}L'' \qquad (II)$$

in which one of a1 and a2 is zero and the other is one;
S″, D, A, S′ and L are as defined in claim 1 or 2;
c is 1 to 10, but a times c is 1-10;
L‴ is a bond or -G-;
L′ and L″ are each H or a polymerizable functional group selected from P′-, P′-B-, P′-BG-, P′-GB- and P′-BGB′-, wherein B, G, B′ are all as defined in claim 1 or 2;
and P′ is an ethylenically unsaturated group, amino, hydroxy, isocyanato, isothiocyanato, carboxy, carboxylic acid anhydride, carboxylic acid halide, epoxy, or other copolymerizable or crosslinkable group.

**4.** A process according to claim 3 wherein the polymer is a copolymer of the monomer of formula II and a copolymerizable monomer.

**5.** An ophthalmic device of a polymer of claim 1.

**6.** An ophthalmic device of a polymer of claim 2.

**7.** An ophthalmic device of a polymer of claim 3.

**8.** An ophthalmic device of a polymer of claim 4.

**9.** The device of claim 5 which is a contact lens.

**10.** The device of claim 6 which is a contact lens.

**11.** The device of claim 7 which is a contact lens.

**12.** The device of claim 8 which is a contact lens.

## Patentansprüche

## Patentansprüche für folgende Vertragsstaaten : AT, BE, CH, DE, FR, GB, GR, IT, LI, LU, NL, SE

**1.** Optisch klares, benetzbares, in wäßrigem Milieu im wesentlichen nicht quellbares, sauerstoffdurchlässiges vernetztes Polymer mit Einheiten S′ der Formel

$$-L4-(A1)_{x1}-(B2A2)_{x2}-(B1)_{x3}-L5- \quad (I)$$

worin x1 und x3 jedes unabhängig eine ganze Zahl von 0 bis 25 darstellen, x2 eine ganze Zahl von 1 bis 25 ist und jedes von A1, A2, B1 und B2 unabhängig ausgewählt ist aus
a) linearen Siloxanen der Formel

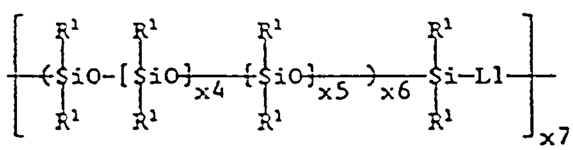

(IV)

und b) cyclischen Siloxanen der Formel

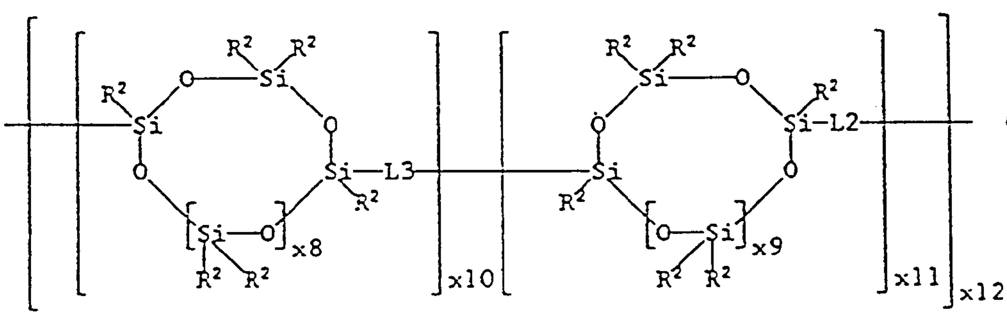

(V)

vorausgesetzt, daß A1 nicht gleich B2 und B1 nicht gleich A2 ist und B2 und A2 nicht gleich sind; weiters vorausgesetzt, daß zumindest eines von A1, A2, B1 und B2 die Formel (V) aufweist; wobei alle $R^1$ gleich oder verschieden sein können; alle $R^2$ gleich oder verschieden sein können; jedes von x4, x5, x6 und x10 unabhängig 0 bis 25 ist; jedes von x7, x11 und x12 unabhängig 1 bis 25 ist; jedes von x8 und x9 unabhängig 0 oder 1 ist;
jedes von $R^1$ und $R^2$ unabhängig ausgewählt ist aus aa) $C_{1-18}$-Alkyl und Aryl mit bis zu 12 Kohlenstoffatomen, von denen jedes unsubstituiert oder mit Halogen oder $C_{1-4}$-Alkyl substituiert ist, ab) Halogen und ac) einer Gruppe der Formel

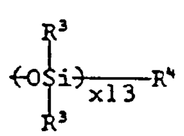

(VI)

worin jedes $R^3$ unabhängig $C_{1-14}$-Alkyl, $-OSi(R^5)_3$ oder $C_{6-12}$-Aryl ist, wobei jedes $R^5$ und $R^4$ unabhängig ausgewählt ist aus $C_{1-4}$-Alkyl, $C_{6-12}$-Aryl, Epoxy, Halogen, Hydroxy-$C_{1-4}$-Alkyl, Amino, Amino-$C_{1-4}$-Alkyl, Hydroxy, Isocyanato und Isothiocyanato; und x13 gleich 1 bis 12, vorzugsweise 1 bis 5 ist;
L3 eine Verbindungsgruppe der Formel $-W-(G-W)_{a3}-$ (VII) darstellt, worin a3 0 oder 1 ist; jedes W aus

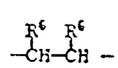

und -O- ausgewählt ist, wenn a3 0 oder 1 ist, und weiters aus

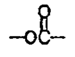 und 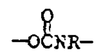

,wenn a3 1 ist; und worin das Atom von W, das an ein Siliciumatom gebunden ist, entweder ein gesättigtes Kohlenstoffatom oder ein Sauerstoffatom ist und jedes $R^6$ unabhängig Wasserstoff oder niederes Alkyl ist;
L1 und L2 jedes ausgewählt ist aus ba) einer Gruppe der Formel VII, wenn 2 Siliciumatome verbunden werden, und bb) einer Gruppe der Formel -W-(G-J)$_{a4}$- (VIII), wenn nicht zwei Siliciumatome verbunden werden und W an ein Siliciumatom gebunden ist, wobei a4 0 oder 1 ist;
W wie zuvor hier definiert ist; J ausgewählt ist aus einer Bindung,

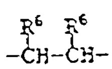, -O-, 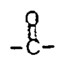, 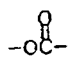, 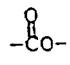, 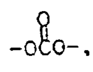, 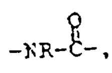, 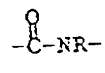, 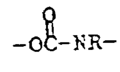,

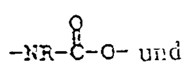 und 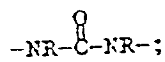;

L4 unabhängig aus einer Bindung und Gruppen der Formel VII und VIII ausgewählt ist;
L5 unabhängig aus einer Bindung und Gruppen der Formel VII und VIII ausgewählt ist;
G ausgewählt ist aus der Gruppe bestehend aus i) einer divalenten, aliphatischen Verbindungsgruppe mit bis zu 25 Kohlenstoffatomen, die durch eine Unterbrechungseinheit unterbrochen sein kann, die aus

-O-, 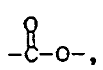, 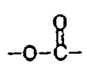, -NR-, 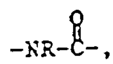, 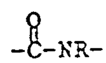,

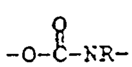, 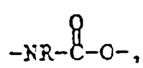, 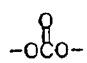 oder 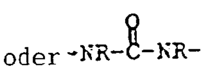

ausgewählt ist, wobei diese divalenten Gruppen mit niederem Alkyl substituiert sein können;

ii) einer divalenten 5-7gliedrigen cycloaliphatischen, einer divalenten 5-7gliedrigen cycloaliphatischen-$C_{1-18}$-aliphatischen und einer divalenten $C_{1-18}$-aliphatischen-5-7gliedrigen-cycloaliphatischen-$C_{1-18}$-aliphatischen Gruppe, die jede im nicht-cyclischen Teil oder zwischen den cyclischen und nicht-cyclischen Teilen durch eine Unterbrechungseinheit unterbrochen oder mit einem Substituenten substituiert oder sowohl unterbrochen als auch substituiert sein können, wie in i) dargelegt;

iii) einem divalenten $C_{6-25}$-Arylen, das unsubstituiert oder mit einem Substituenten substituiert ist, der ausgewählt ist aus Halogen, $C_{1-4}$-Alkyl, $C_{1-12}$-Perhalogenalkyl, Amino, Carboxy, $C_{1-4}$-Alkoxycarbonyl, Aminocarbonyl, $C_{1-4}$-Alkylamino-carbonyl, Di($C_{1-4}$-alkyl)aminocarbonyl und einem Polyglycol der Formel

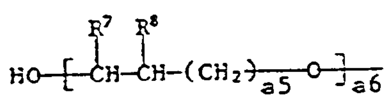 (IX)

worin a5 0 oder 1 ist; wobei eines von $R^7$ und $R^8$ Wasserstoff und das andere Methyl oder Wasserstoff ist, wenn a5 0 ist, und $R^7$ und $R^8$ beide Wasserstoff sind, wenn a5 1 ist; und a6 eine ganze Zahl bis zu 60 ist;

iv) einem divalenten Aralkyl oder Alkaryl mit 7-25 Kohlenstoffatomen, wobei diese im Alkylteil oder zwischen dem Alkyl- und dem Arylteil durch eine unter i) angeführte Unterbrechungsgruppe unterbrochen sein können und jede der genannten nicht unterbrochenen und unterbrochenen Aralkyl- und Alkarylgruppen unsubstituiert oder im Arylring wie in iii) dargelegt substituiert und/oder im Alkylteil mit einem

in i) dargelegten Substituenten substituiert ist;

v) einem divalenten Aliphatyl-aryl-aliphatyl, worin die Gesamtzahl der Aliphatyl-Kohlenstoffatome bis zu 40 beträgt und der Arylteil $C_6$-$_{14}$ beträgt, wobei die Aliphatyl-Teile nicht unterbrochen oder durch eine unter i) angeführte Unterbrechungseinheit unterbrochen sind, wobei das Aliphatyl-aryl-aliphatyl möglicherweise auch zwischen einer oder beiden Aliphatylgruppen und der Arylgruppe durch eine unter i) angeführte Unterbrechungsgruppe unterbrochen ist, wobei die Aliphatylgruppen unsubstituiert oder mit einem unter i) angegebenen Substituenten substituiert sind und/oder der Arylteil unsubstituiert oder mit einem unter iii) angeführten Substituenten substituiert ist.

2. Vernetztes Polymer nach Anspruch 1 mit Einheiten S″ der Formel

$$\{S'\text{-}L\text{-}D\text{-}A\text{-}L\}_a \qquad \text{(III)}$$

worin S′ die im Anspruch 1 definierte Formel I hat; a eine ganze Zahl von 1 bis 10 ist; jedes D gleich -O- oder -NR-, wobei R Wasserstoff oder niederes Alkyl darstellt, oder eine Bindung ist; jedes L -BGB′-, -BG- oder -GB- ist; jedes B und B′ unabhängig aus -CO-, -COO- und -C(O)NR- ausgewählt ist, worin das Carbonyl an L4, L5, D oder A gebunden ist; G wie im Anspruch 1 definiert ist; jedes A unabhängig ein Segment der Formel X ist,

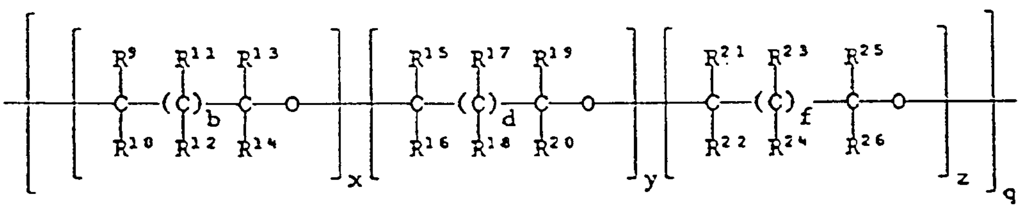

(X)

wobei der endständige Sauerstoff in jeder Einheit der Formel X durch -N(R)- ersetzbar ist; worin jedes b, d und f unabhängig 0-4 ist; q eine Zahl von 1 bis 1000 ist; jedes x, y und z unabhängig 0 bis 100 ist, wobei zumindest eines von x, y und z zumindest 1 ist; und (x+y+z) mal q gleich 4 bis 1000 ist;

jedes von $R^9$, $R^{10}$, $R^{13}$-$R^{16}$, $R^{19}$-$R^{22}$, $R^{25}$ und $R^{26}$ unabhängig ausgewählt ist aus der Gruppe bestehend aus Wasserstoff, Halogen, einem aliphatischen, einen Aromaten oder einen Heterocyclus enthaltenden Rest, ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; und substituiertem $C_2$-$C_{16}$-Alkenyl; worin die Alkyl- und Alkenylsubstituenten unabhängig ausgewählt sind aus $C_1$-$C_{16}$-Alkoxycarbonyl, $C_2$-$C_{16}$-Alkenyloxycarbonyl, Fluor, Aryl mit bis zu 10 Kohlenstoffatomen, $C_1$-$C_{16}$-Alkoxy, Formyloxy, $C_2$-$C_{16}$-Alkanoyloxy, Aryloxy mit bis zu 10 Kohlenstoffatomen, $C_3$-$C_6$-Alkenoyloxy, Aroyl mit bis zu 11 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy(bis zu 7 Kohlenstoffatome)-carbonyl, Oxacycloalkyl(bis zu 7 Kohlenstoffatome)-carbonyloxy und Aryl(bis zu 10 Kohlenstoffatome)-oxycarbonyl, wobei jeder der Alkyl- und Alkenylsubstituenten unsubstituiert ist oder substituiert mit $C_1$-$C_6$-Alkyl, Fluor oder einem $C_1$-$C_6$-Alkoxy, vorausgesetzt, daß das letztgenannte Alkoxy nicht an ein Kohlenstoffatom gebunden ist, das bereits einfach an ein anderes Sauerstoffatom gebunden ist; $R^9$, $R^{10}$, $R^{13}$-$R^{16}$, $R^{19}$-$R^{22}$, $R^{25}$ und $R^{26}$ weiters unabhängig ausgewählt sind aus Aryl mit bis zu 10 Kohlenstoffatomen, $C_3$-$C_8$-Cycloalkyl und Oxacycloalkyl mit bis zu 7 Kohlenstoffatomen, wobei jeder davon unsubstituiert oder weiter mit einem aus der Gruppe der oben für $R^9$-Alkyl angeführten Substituenten ausgewählten Substituenten substituiert ist;

$R^{11}$, $R^{12}$, $R^{17}$ $R^{18}$, $R^{23}$ und $R^{24}$ aus den gleichen Gruppen ausgewählt sind, die oben für $R^9$ angeführt wurden; und $R^{11}$, $R^{12}$, $R^{17}$, $R^{18}$, $R^{23}$ und $R^{24}$ weiters unabhängig ausgewählt sind aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes unsubstituiert oder substituiert ist mit Fluor, Aryl mit bis zu 10 Kohlenstoffatomen oder $C_1$-$C_{16}$-Alkoxy, und $R^{11}$, $R^{12}$, $R^{17}$, $R^{18}$, $R^{23}$ und $R^{24}$ weiters unabhängig ausgewählt sind aus Aryloxy mit bis zu 10 Kohlenstoffatomen, Cycloalkoxy mit bis zu 8 Kohlenstoffatomen, Cycloalkyl(bis zu 8 Kohlenstoffatome)-carbonyloxy, Cycloalkoxy(mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy(mit bis zu 7 Kohlenstoffatomen)-carbonyl, Oxacycloalkyl(mit bis zu 7 Kohlenstoffatomen)-carbonyloxy und Aryloxy(mit bis zu 10 Kohlenstoffatomen)-carbonyl, von denen jedes unsubstituiert oder mit Fluor, $C_1$-$C_6$-Alkyl oder $C_1$-$C_6$-Alkoxy substituiert ist, vorausgesetzt, daß jeder Substituent, der an der Verbindung zum Rest des Moleküls ein einfach gebundenes Sauerstoffatom aufweist, nicht Substituent am gleichen Kohlenstoffatom sein kann, das einfach an ein anderes Sauerstoffatom gebunden ist; oder 2 benachbarte Gruppen, die aus $R^9$-$R^{26}$ ausgewählt sind, zusammen mit den Atomen, an die sie gebunden sind, einen 5-8gliedrigen Cycloalkyl-, Oxacycloalkyl- oder Bicycloalkylring bilden können.

3. Polymer nach Anspruch 2, das ein Polymer aus einem Monomer der Formel

$$L'-(D-A-L)_{a1}-(S'')_{c}-(S'-L''')_{a2}-L'' \qquad (II)$$

ist, worin eines von a1 und a2 0 und das andere 1 ist; S″, D, A, S′ und L wie im Anspruch 1 oder 2 definiert sind; c 1 bis 10 ist, aber a mal c gleich 1-10 ist; L‴ eine Bindung oder -G- ist; L′ und L″ jedes H oder eine polymerisierbare funktionelle Gruppe sind, die ausgewählt ist aus P′-, P′-B-, P′-BG-, P′-GB- und P′-BGB′-, worin B, G, B′ wie im Anspruch 1 oder 2 definiert sind; und P′ eine ethylenisch ungesättigte Gruppe, Amino, Hydroxy, Isocyanato, Isothiocyanato, Carboxy, Carbonsäureanhydrid, Carbonsäurehalogenid, Epoxy oder eine andere copolymerisierbare oder vernetzbare Gruppe ist.

4. Polymer nach Anspruch 3, das ein Copolymer des Monomers der Formel II und eines copolymerisierbaren Monomers ist.

5. Ophthalmischer Behelf aus einem Polymer nach Anspruch 1.

6. Ophthalmischer Behelf aus einem Polymer nach Anspruch 2.

7. Ophthalmischer Behelf aus einem Polymer nach Anspruch 3.

8. Ophthalmischer Behelf aus einem Polymer nach Anspruch 4.

9. Behelf nach Anspruch 5, der eine Kontaktlinse ist.

10. Behelf nach Anspruch 6, der eine Kontaktlinse ist.

11. Behelf nach Anspruch 7, der eine Kontaktlinse ist.

12. Behelf nach Anspruch 8, der eine Kontaktlinse ist.

**Patentansprüche für folgenden Vertragsstaat : ES**

1. Verfahren zur Herstellung eines optisch klaren, benetzbaren, in wäßrigem Milieu im wesentlichen nicht quellbaren, sauerstoffdurchlässigen vernetzten Polymers mit Einheiten S′ der Formel

$$-L4-(A1)_{x1}-(B2A2)_{x2}-(B1)_{x3}-L5- \qquad (I)$$

worin x1 und x3 jedes unabhängig eine ganze Zahl von 0 bis 25 darstellen, x2 eine ganze Zahl von 1 bis 25 ist und jedes von A1, A2, B1 und B2 unabhängig ausgewählt ist aus
a) linearen Siloxanen der Formel

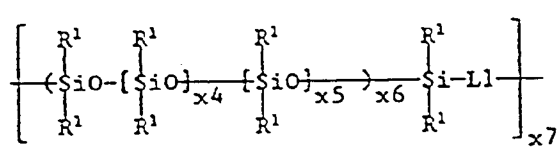

(IV)

und b) cyclischen Siloxanen der Formel

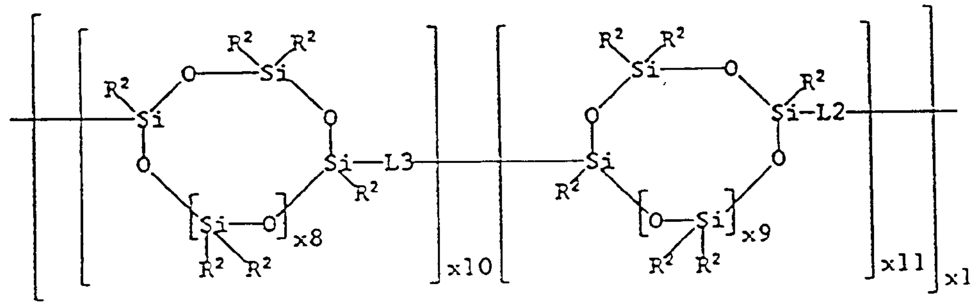

(V)

vorausgesetzt, daß A1 nicht gleich B2 und B1 nicht gleich A2 ist und B2 und A2 nicht gleich sind; weiters vorausgesetzt, daß zumindest eines von A1, A2, B1 und B2 die Formel (V) aufweist; wobei alle $R^1$ gleich oder verschieden sein können; alle $R^2$ gleich oder verschieden sein können; jedes von x4, x5, x6 und x10 unabhängig 0 bis 25 ist; jedes von x7, x11 und x12 unabhängig 1 bis 25 ist; jedes von x8 und x9 unabhängig 0 oder 1 ist;

jedes von $R^1$ und $R^2$ unabhängig ausgewählt ist aus aa) $C_{1-18}$-Alkyl und Aryl mit bis zu 12 Kohlenstoffatomen, von denen jedes unsubstituiert oder mit Halogen oder $C_{1-4}$-Alkyl substituiert ist, ab) Halogen und ac) einer Gruppe der Formel

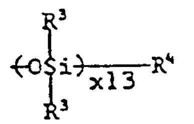

(VI)

worin jedes $R^3$ unabhängig $C_{1-14}$-Alkyl, $-OSi(R^5)_3$ oder $C_{6-12}$-Aryl ist, wobei jedes $R^5$ und $R^4$ unabhängig ausgewählt ist aus $C_{1-4}$-Alkyl, $C_{6-12}$-Aryl, Epoxy, Halogen, Hydroxy-$C_{1-4}$-Alkyl, Amino, Amino-$C_{1-4}$-Alkyl, Hydroxy, Isocyanato und Isothiocyanato; und x13 gleich 1 bis 12, vorzugsweise 1 bis 5 ist;

L3 eine Verbindungsgruppe der Formel $-W-(G-W)_{a3}-$ (VII) darstellt, worin a3 0 oder 1 ist; jedes W aus

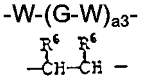

und -O- ausgewählt ist, wenn a3 0 oder 1 ist, und weiters aus

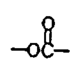 und 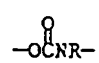

,wenn a3 1 ist; und worin das Atom von W, das an ein Siliciumatom gebunden ist, entweder ein gesättigtes Kohlenstoffatom oder ein Sauerstoffatom ist und jedes $R^6$ unabhängig Wasserstoff oder niederes Alkyl ist;

L1 und L2 jedes ausgewählt ist aus ba) einer Gruppe der Formel VII, wenn 2 Siliciumatome verbunden werden, und bb) einer Gruppe der Formel $-W-(G-J)_{a4}-$ (VIII), wenn nicht zwei Siliciumatome verbunden werden und W an ein Siliciumatom gebunden ist, wobei a4 0 oder 1 ist;

W wie zuvor hier definiert ist; J ausgewählt ist aus einer Bindung,

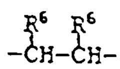, -O-, 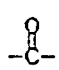, 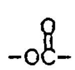, 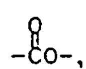, 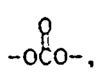, 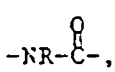, 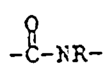, 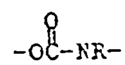,

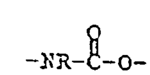 und 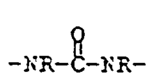;

L4 unabhängig aus einer Bindung und Gruppen der Formel VII und VIII ausgewählt ist;

L5 unabhängig aus einer Bindung und Gruppen der Formel VII und VIII ausgewählt ist;

G ausgewählt ist aus der Gruppe bestehend aus i) einer divalenten, aliphatischen Verbindungsgruppe mit bis zu 25 Kohlenstoffatomen, die durch eine Unterbrechungseinheit unterbrochen sein kann, die aus

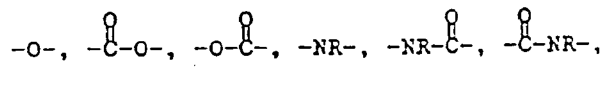

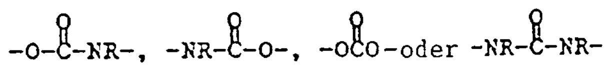

ausgewählt ist, wobei diese divalenten Gruppen mit niederem Alkyl substituiert sein können;

ii) einer divalenten 5-7gliedrigen cycloaliphatischen, einer divalenten 5-7gliedrigen cycloaliphatischen-$C_1$-$_{18}$-aliphatischen und einer divalenten $C_1$-$_{18}$-aliphatischen-5-7gliedrigen-cycloaliphatischen-$C_1$-$_{18}$-aliphatischen Gruppe, die jede im nicht-cyclischen Teil oder zwischen den cyclischen und nicht-cyclischen Teilen durch eine Unterbrechungseinheit unterbrochen oder mit einem Substituenten substituiert oder sowohl unterbrochen als auch substituiert sein können, wie in i) dargelegt;

iii) einem divalenten $C_6$-$_{25}$-Arylen, das unsubstituiert oder mit einem Substituenten substituiert ist, der ausgewählt ist aus Halogen, $C_1$-$_4$-Alkyl, $C_1$-$_{12}$-Perhalogenalkyl, Amino, Carboxy, $C_1$-$_4$-Alkoxycarbonyl, Aminocarbonyl, $C_1$-$_4$-Alkylamino-carbonyl, Di($C_1$-$_4$-alkyl)aminocarbonyl und einem Polyglycol der Formel

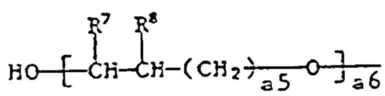 (IX)

worin a5 0 oder 1 ist; wobei eines von $R^7$ und $R^8$ Wasserstoff und das andere Methyl oder Wasserstoff ist, wenn a5 0 ist, und $R^7$ und $R^8$ beide Wasserstoff sind, wenn a5 1 ist; und a6 eine ganze Zahl bis zu 60 ist;

iv) einem divalenten Aralkyl oder Alkaryl mit 7-25 Kohlenstoffatomen, wobei diese im Alkylteil oder zwischen dem Alkyl- und dem Arylteil durch eine unter i) angeführte Unterbrechungsgruppe unterbrochen sein können und jede der genannten nicht unterbrochenen und unterbrochenen Aralkyl- und Alkarylgruppen unsubstituiert oder im Arylring wie in iii) dargelegt substituiert und/oder im Alkylteil mit einem in i) dargelegten Substituenten substituiert ist;

v) einem divalenten Aliphatyl-aryl-aliphatyl, worin die Gesamtzahl der Aliphatyl-Kohlenstoffatome bis zu 40 beträgt und der Arylteil $C_6$-$_{14}$ beträgt, wobei die Aliphatyl-Teile nicht unterbrochen oder durch eine unter i) angeführte Unterbrechungseinheit unterbrochen sind, wobei das Aliphatyl-aryl-aliphatyl möglicherweise auch zwischen einer oder beiden Aliphatylgruppen und der Arylgruppe durch eine unter i) angeführte Unterbrechungsgruppe unterbrochen ist, wobei die Aliphatylgruppen unsubstituiert oder mit einem unter i) angegebenen Substituenten substituiert sind und/oder der Arylteil unsubstituiert oder mit einem unter iii) angeführten Substituenten substituiert ist; in welchem Verfahren die Ausgangsmaterialien auf herkömmliche Weise umgesetzt werden.

2. Verfahren nach Anspruch 1, worin das vernetzte Polymer nach Anspruch 1 Einheiten S″ der Formel

$$\{S'\text{-}L\text{-}D\text{-}A\text{-}L\}_a \qquad \text{(III)}$$

aufweist, worin S′ die im Anspruch 1 definierte Formel I hat; a eine ganze Zahl von 1 bis 10 ist; jedes D gleich -O- oder -NR-, wobei R Wasserstoff oder niederes Alkyl darstellt, oder eine Bindung ist; jedes L -BGB′-, -BG- oder -GB- ist; jedes B und B′ unabhängig aus -CO-, -COO- und -C(O)NR- ausgewählt ist, worin das Carbonyl an L4, L5, D oder A gebunden ist; G wie im Anspruch 1 definiert ist; jedes A unabhängig ein Segment der Formel X ist,

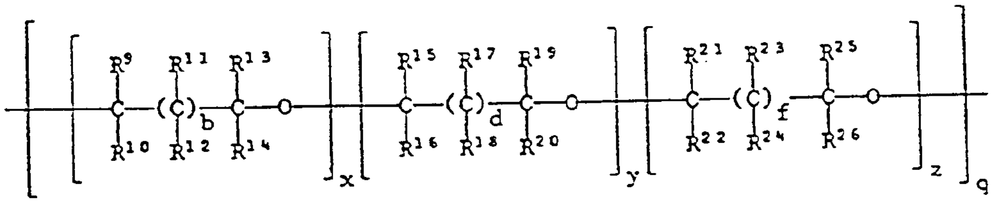

(X)

wobei der endständige Sauerstoff in jeder Einheit der Formel X durch -N(R)- ersetzbar ist; worin jedes b, d und f unabhängig 0-4 ist; q eine Zahl von 1 bis 1000 ist; jedes x, y und z unabhängig 0 bis 100 ist, wobei zumindest eines von x, y und z zumindest 1 ist; und (x+y+z) mal q gleich 4 bis 1000 ist; jedes von $R^9$, $R^{10}$, $R^{13}$-$R^{16}$, $R^{19}$-$R^{22}$, $R^{25}$ und $R^{26}$ unabhängig ausgewählt ist aus der Gruppe bestehend aus Wasserstoff, Halogen, einem aliphatischen, einen Aromaten oder einen Heterocyclus enthaltenden Rest, ausgewählt aus unsubstituiertem $C_1$-$C_{16}$-Alkyl; substituiertem $C_1$-$C_{16}$-Alkyl; unsubstituiertem $C_2$-$C_{16}$-Alkenyl; und substituiertem $C_2$-$C_{16}$-Alkenyl; worin die Alkyl- und Alkenylsubstituenten unabhängig ausgewählt sind aus $C_1$-$C_{16}$-Alkoxycarbonyl, $C_2$-$C_{16}$-Alkenyloxycarbonyl, Fluor, Aryl mit bis zu 10 Kohlenstoffatomen, $C_1$-$C_{16}$-Alkoxy, Formyloxy, $C_2$-$C_{16}$-Alkanoyloxy, Aryloxy mit bis zu 10 Kohlenstoffatomen, $C_3$-$C_6$-Alkenoyloxy, Aroyl mit bis zu 11 Kohlenstoffatomen, Aroyloxy mit bis zu 11 Kohlenstoffatomen, $C_3$-$C_8$-Cycloalkyl, $C_3$-$C_8$-Cycloalkoxy, $C_3$-$C_8$-Cycloalkyl-carbonyloxy, $C_3$-$C_8$-Cycloalkoxy-carbonyl, Oxacycloalkyl mit bis zu 7 Kohlenstoffatomen, Oxacycloalkoxy mit bis zu 7 Kohlenstoffatomen, Oxacycloalkoxy(bis zu 7 Kohlenstoffatome)-carbonyl, Oxacycloalkyl(bis zu 7 Kohlenstoffatome)-carbonyloxy und Aryl(bis zu 10 Kohlenstoffatome)-oxycarbonyl, wobei jeder der Alkyl- und Alkenylsubstituenten unsubstituiert ist oder substituiert mit $C_1$-$C_6$-Alkyl, Fluor oder einem $C_1$-$C_6$-Alkoxy, vorausgesetzt, daß das letztgenannte Alkoxy nicht an ein Kohlenstoffatom gebunden ist, das bereits einfach an ein anderes Sauerstoffatom gebunden ist; $R^9$, $R^{10}$, $R^{13}$-$R^{16}$, $R^{19}$-$R^{22}$, $R^{25}$ und $R^{26}$ weiters unabhängig ausgewählt sind aus Aryl mit bis zu 10 Kohlenstoffatomen, $C_3$-$C_8$-Cycloalkyl und Oxacycloalkyl mit bis zu 7 Kohlenstoffatomen, wobei jeder davon unsubstituiert oder weiter mit einem aus der Gruppe der oben für $R^9$-Alkyl angeführten Substituenten ausgewählten Substituenten substituiert ist;
$R^{11}$, $R^{12}$, $R^{17}$, $R^{18}$, $R^{23}$ und $R^{24}$ aus den gleichen Gruppen ausgewählt sind, die oben für $R^9$ angeführt wurden; und $R^{11}$, $R^{12}$, $R^{17}$, $R^{18}$, $R^{23}$ und $R^{24}$ weiters unabhängig ausgewählt sind aus $C_1$-$C_{16}$-Alkoxycarbonyl, $C_3$-$C_{16}$-Alkenoyloxy, $C_2$-$C_{16}$-Alkenyloxycarbonyl und $C_1$-$C_{16}$-Alkanoyloxy, von denen jedes unsubstituiert oder substituiert ist mit Fluor, Aryl mit bis zu 10 Kohlenstoffatomen oder $C_1$-$C_{16}$-Alkoxy, und $R^{11}$, $R^{12}$, $R^{17}$, $R^{18}$, $R^{23}$ und $R^{24}$ weiters unabhängig ausgewählt sind aus Aryloxy mit bis zu 10 Kohlenstoffatomen, Cycloalkoxy mit bis zu 8 Kohlenstoffatomen, Cycloalkyl(bis zu 8 Kohlenstoffatome)-carbonyloxy, Cycloalkoxy(mit bis zu 8 Kohlenstoffatomen)-carbonyl, Aroyloxy mit bis zu 11 Kohlenstoffatomen, Oxacycloalkoxy mit bis zu 7 Kohlenstoffatomen, Oxacycloalkenyloxy mit bis zu 7 Kohlenstoffatomen, Oxacycloalkoxy(mit bis zu 7 Kohlenstoffatomen)-carbonyl, Oxacycloalkyl(mit bis zu 7 Kohlenstoffatomen)-carbonyloxy und Aryloxy(mit bis zu 10 Kohlenstoffatomen)-carbonyl, von denen jedes unsubstituiert oder mit Fluor, $C_1$-$C_6$-Alkyl oder $C_1$-$C_6$-Alkoxy substituiert ist, vorausgesetzt, daß jeder Substituent, der an der Verbindung zum Rest des Moleküls ein einfach gebundenes Sauerstoffatom aufweist, nicht Substituent am gleichen Kohlenstoffatom sein kann, das einfach an ein anderes Sauerstoffatom gebunden ist; oder 2 benachbarte Gruppen, die aus $R^9$-$R^{26}$ ausgewählt sind, zusammen mit den Atomen, an die sie gebunden sind, einen 5-8gliedrigen Cycloalkyl-, Oxacycloalkyl- oder Bicycloalkylring bilden können.

3. Verfahren nach Anspruch 2, worin das Polymer ein Polymer aus einem Monomer der Formel

$$L'\text{-}(D\text{-}A\text{-}L)_{a1}\text{—}(S'')_{c}\text{—}(S'\text{-}L''')_{a2}\text{—}L'' \qquad (II)$$

ist, worin eines von a1 und a2 0 und das andere 1 ist; S″, D, A, S′ und L wie im Anspruch 1 oder 2 definiert sind; c 1 bis 10 ist, aber a mal c gleich 1-10 ist; L‴ eine Bindung oder -G- ist; L′ und L″ jedes H oder eine polymerisierbare funktionelle Gruppe sind, die ausgewählt ist aus P′-, P′-B-, P′-BG-, P′-GB- und P′-BGB′-, worin B, G, B′ wie im Anspruch 1 oder 2 definiert sind; und P′ eine ethylenisch ungesättigte Gruppe, Amino, Hydroxy, Isocyanato, Isothiocyanato, Carboxy, Carbonsäureanhydrid, Carbonsäurehalogenid, Epoxy oder eine andere copolymerisierbare oder vernetzbare Gruppe ist.

4. Verfahren nach Anspruch 3, worin das Polymer ein Copolymer des Monomers der Formel II und eines copolymerisierbaren Monomers ist.

5. Ophthalmischer Behelf aus einem Polymer nach Anspruch 1.

6. Ophthalmischer Behelf aus einem Polymer nach Anspruch 2.

7. Ophthalmischer Behelf aus einem Polymer nach Anspruch 3.

8. Ophthalmischer Behelf aus einem Polymer nach Anspruch 4.

9. Behelf nach Anspruch 5, der eine Kontaktlinse ist.

10. Behelf nach Anspruch 6, der eine Kontaktlinse ist.

11. Behelf nach Anspruch 7, der eine Kontaktlinse ist.

12. Behelf nach Anspruch 8, der eine Kontaktlinse ist.

## Revendications

### Revendications pour les Etats contractants suivants : AT, BE, CH, DE, FR, GB, GR, IT, LI, LU, NL, SE

1. Polymère réticulé perméable à l'oxygène, optiquement transparent, mouillable, essentiellement non gonflable dans un environnement aqueux, possédant des motifs S' de formule

$$-L4-(A1)_{x1}-(B2A2)_{x2}-(B1)_{x3}-L5- \qquad (I)$$

dans laquelle x1 et x3 sont chacun indépendamment un nombre entier de zéro à 25;
x2 est un nombre entier de 1 à 25;
et chacun des radicaux A1, A2, B1 et B2 est choisi indépendamment parmi
a) les siloxanes linéaires de formule

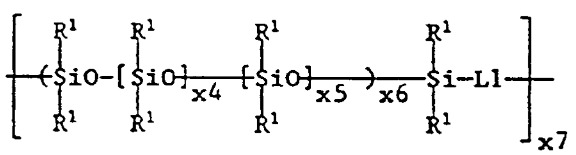

(IV)

et b) les siloxanes cycliques de formule

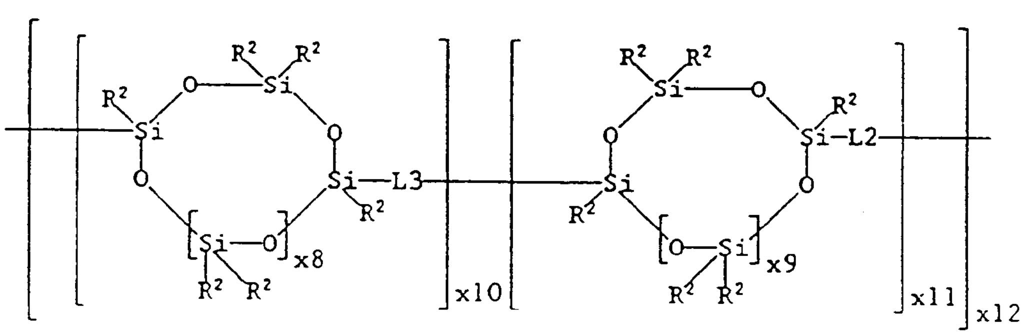

(V)

à condition que A1 ne soit pas identique à B2 et que B1 ne soit pas identique à A2 et que B2 et A2 ne soient pas identiques;
à condition aussi que l'un au moins des radicaux A1, A2, B1 et B2 réponde à la formule (V);
dans laquelle chaque $R^1$ peut être identique ou différent;
chaque $R^2$ peut être identique ou différent;
chacun de x4, x5, x6 et x10 vaut indépendamment de zéro à 25;
chacun de x7, x11 et x12 vaut indépendamment de 1 à 25;
chacun de x8 et x9 vaut indépendamment zéro ou un;
chacun de $R^1$ et $R^2$ est choisi indépendamment parmi

aa) un groupe alkyle en $C_1$-$C_{18}$ et un groupe aryle comportant jusqu'à 12 atomes de carbone, chacun d'eux étant non substitué ou substitué par un atome d'halogène ou par un groupe alkyle en $C_1$-$C_4$;
ab) un atome d'halogène; et
ac) un groupe de formule

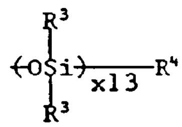 (VI)

dans laquelle chaque $R^3$ est indépendamment un groupe alkyle en $C_1$-$C_{14}$, $-OSi(R^5)_3$ ou aryle en $C_6$-$C_{12}$, chaque $R^5$ et $R^4$ étant choisi indépendamment parmi les groupes alkyle en $C_1$-$C_4$, aryle en $C_6$-$C_{12}$, époxy, halogéno, hydroxyalkyle en $C_1$-$C_4$, amino, aminoalkyle en $C_1$-$C_4$, hydroxy, isocyanato et isothiocyanato; et x13 vaut 1 à 12, de préférence 1 à 5; L3 est un groupe de liaison de formule

$$-W-(G-W)_{a3}- \quad (VII)$$

dans laquelle a3 vaut zéro ou un;
chaque W est choisi parmi

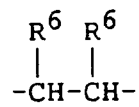

et -O-, lorsque a3 vaut zéro ou un, et aussi parmi

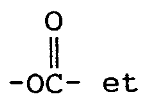 et 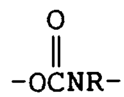

lorsque a3 vaut 1;
et dans laquelle l'atome W fixé à un atome de silicium est soit un atome de carbone saturé, soit un atome d'oxygène, et chaque $R^6$ est indépendamment un atome d'hydrogène ou un groupe alkyle inférieur;
L1 et L2 sont chacun choisis parmi
ba) un groupe de formule VII lorsqu'il relie 2 atomes de silicium et
bb) un groupe de formule

$$-W-(G-J)_{a4}- \quad (VIII)$$

lorsqu'il ne relie pas deux atomes de silicium et W est fixé à un atome de silicium, dans laquelle a4 vaut zéro ou un; W est tel que défini ci-dessus;
et J est choisi parmi une liaison,

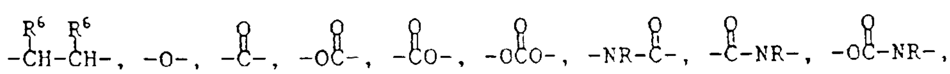

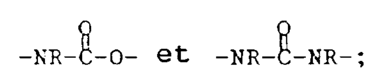

L4 est choisi indépendamment parmi une liaison et des groupes de formule VII et VIII;
L5 est choisi indépendamment parmi une liaison et des groupes de formules VII et VIII;
G est choisi dans le groupe constitué par
i) un groupe de liaison aliphatique divalent comportant jusqu'à 25 atomes de carbone, qui peut être interrompu par un motif d'interruption choisi parmi

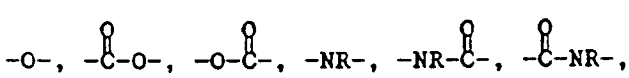

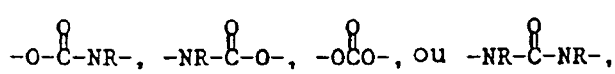

ces groupes divalents pouvant être substitués par un groupe alkyle inférieur;
ii) un groupe divalent cycloaliphatique à 5-7 chaînons, un groupe divalent cycloaliphatique à 5-7 chaînons-aliphatique en $C_1$-$C_{18}$ et un groupe divalent aliphatique en $C_1$-$C_{18}$-cycloaliphatique à 5-7 chaînons-aliphatique en $C_1$-$C_{18}$, dont chacun peut être interrompu dans sa partie non cyclique ou entre sa partie cyclique et sa partie non cyclique par un motif d'interruption, ou substitué par un substituant, ou à la fois interrompu et substitué, comme décrit en i) ci-dessus;
iii) un groupe arylène en $C_6$-$C_{25}$ divalent, qui est non substitué ou substitué par un substituant choisi parmi un atome d'halogène, un groupe alkyle en $C_1$-$C_4$, perhalogénoalkyle en $C_1$-$C_{12}$, amino, carboxy, alcoxycarbonyle en $C_1$-$C_4$, aminocarbonyle, alkyl(en $C_1$-$C_4$)aminocarbonyle, di(alkyl en $C_1$-$C_4$)-aminocarbonyle et un polyglycol de formule

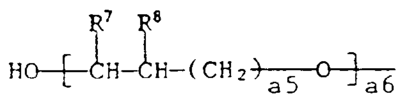

(IX)

dans laquelle a5 vaut zéro ou un;
l'un des radicaux $R^7$ et $R^8$ est un atome d'hydrogène et l'autre est un groupe méthyle ou un atome d'hydrogène lorsque a5 vaut zéro; et les deux radicaux $R^7$ et $R^8$ sont des atomes d'hydrogène lorsque a5 vaut un;
et a6 est un nombre entier jusqu'à 60;
iv) un groupe arylalkyle ou alkylaryle divalent comportant 7-25 atomes de carbone, chacun d'eux pouvant être interrompu, dans la partie alkyle ou entre les parties alkyle et aryle, par un groupe d'interruption tel que défini en i) ci-dessus, et chacun desdits groupes arylalkyle et alkylaryle non interrompus ou interrompus étant non substitué ou substitué sur le noyau aryle comme défini en iii) et/ou substitué dans la partie alkyle par un substituant tel que défini en i);
v) un groupe aliphatyl-aryl-aliphatyle divalent dans lequel le nombre total d'atomes de carbone du groupe aliphatyle est d'au plus 40, et la partie aryle étant en $C_6$-$C_{14}$, les parties aliphatyle étant non interrompues ou interrompues par un motif d'interruption tel que défini en i) ci-dessus, le groupe aliphatyl-aryl-aliphatyle étant aussi éventuellement interrompu entre un groupe aliphatyle, ou les deux groupes aliphatyle, et le groupe aryle par un groupe d'interruption tel que défini en i) ci-dessus, les groupes aliphatyle étant non substitués ou substitués par un substituant tel que défini en i) ci-dessus, et/ou la partie aryle étant non substituée ou substituée par un substituant tel que défini en iii) ci-dessus.

2. Polymère réticulé selon la revendication 1, possédant des motifs S″ de formule

$$-(S'\text{-}L\text{-}D\text{-}A\text{-}L)_a- \qquad \text{(III)}$$

dans laquelle S′ répond à la formule I telle que définie dans la revendication 1;
a est un nombre entier de 1-10;
chaque D est -O- ou -NR-, R étant un atome d'hydrogène ou un groupe alkyle inférieur, ou encore une liaison;
chaque L est -BGB′-, -BG- ou -GB-;
chaque B et B′ est choisi indépendamment parmi -CO-, -COO- et -C(O)NR-, où le groupe carbonyle est fixé à L4, L5, D ou A;
G est tel que défini dans la revendication 1;
chaque A est indépendamment un segment de formule X,

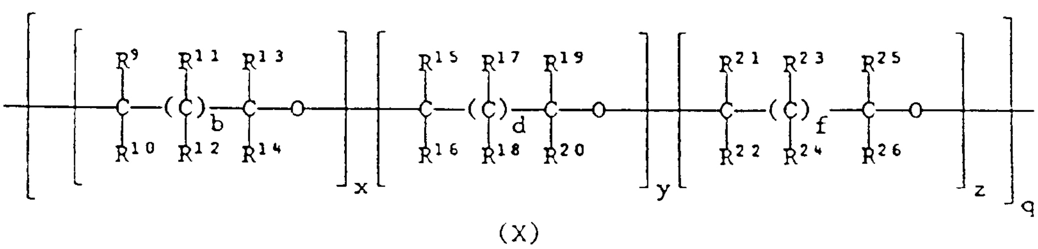

(X)

l'atome d'oxygène terminal de chaque motif de formule X pouvant être remplacé par -N(R)-;
où chaque b, d et f vaut indépendamment 0-4; q est un nombre entier de 1 à 1 000; chaque x, y et z vaut indépendamment 0 à 100, l'un au moins de x, y et z valant au moins 1; et (x+y+z) multiplié par q a une

valeur de 4 à 1 000; chacun des radicaux $R^9$, $R^{10}$, $R^{13}$-$R^{16}$, $R^{19}$-$R^{22}$, $R^{25}$ et $R^{26}$ est choisi indépendamment dans le groupe constitué par un atome d'hydrogène, un atome d'halogène, un radical contenant un groupement aliphatique, aromatique ou hétérocyclique, choisi parmi les groupes alkyle en $C_1$-$C_{16}$ non substitués; alkyle en $C_1$-$C_{16}$ substitués; alcényle en $C_2$-$C_{16}$ non substitués; et alcényle en $C_2$-$C_{16}$ substitués; dans lesquels les substituants alkyle et alcényle sont choisis indépendamment parmi les groupes alcoxycarbonyle en $C_1$-$C_{16}$, alcényloxycarbonyle en $C_2$-$C_{16}$, fluoro, aryle comportant jusqu'à 10 atomes de carbone, alcoxy en $C_1$-$C_{16}$, formyloxy, alcanoyloxy en $C_2$-$C_{16}$, aryloxy comportant jusqu'à 10 atomes de carbone, alcénoyloxy en $C_3$-$C_6$, aroyle comportant jusqu'à 11 atomes de carbone, aroyloxy comportant jusqu'à 11 atomes de carbone, cycloalkyle en $C_3$-$C_8$, cycloalcoxy en $C_3$-$C_8$, cycloalkyl(en $C_3$-$C_8$)-carbonyloxy, cycloalcoxy(en $C_3$-$C_8$)carbonyle, oxacycloalkyle comportant jusqu'à 7 atomes de carbone, oxacycloalcoxy comportant jusqu'à 7 atomes de carbone, oxacycloalcoxy-(comportant jusqu'à 7 atomes de carbone)carbonyle, oxacycloalkyle(comportant jusqu'à 7 atomes de carbone)carbonyloxy, et aryl(comportant jusqu'à 10 atomes de carbone)oxycarbonyle, chacun desdits substituants alkyle et alcényle étant non substitué ou substitué par un groupe alkyle en $C_1$-$C_6$, fluoro ou alcoxy en $C_1$-$C_6$, à condition que ce dernier groupe alcoxy ne soit pas fixé à un atome de carbone déjà fixé par une liaison simple à un autre atome d'oxygène; $R^9$, $R^{10}$, $R^{13}$-$R^{16}$, $R^{19}$-$R^{22}$, $R^{25}$ et $R^{26}$ étant en outre choisis indépendamment parmi les groupes aryle comportant jusqu'à 10 atomes de carbone, cycloalkyle en $C_3$-$C_8$ et oxacycloalkyle comportant jusqu'à 7 atomes de carbone, chacun d'eux étant non substitué ou substitué aussi par un substituant choisi dans le groupe des substituants dudit groupe alkyle $R^9$ cités ci-dessus;
$R^{11}$, $R^{12}$, $R^{17}$, $R^{18}$, $R^{23}$ et $R^{24}$ sont choisis parmi les mêmes groupes que ceux définis ci-dessus pour $R^9$; et $R^{11}$, $R^{12}$, $R^{17}$, $R^{18}$, $R^{23}$ et $R^{24}$ sont aussi choisis indépendamment parmi les groupes alcoxycarbonyle en $C_1$-$C_{16}$, alcénoyloxy en $C_3$-$C_{16}$, alcényloxycarbonyle en $C_2$-$C_{16}$ et alcanoyloxy en $C_1$-$C_{16}$, chacun d'eux étant non substitué ou substitué par un groupe fluoro, aryle comportant jusqu'à 10 atomes de carbone ou alcoxy en $C_1$-$C_{16}$, et $R^{11}$, $R^{12}$, $R^{17}$, $R^{18}$, $R^{23}$ et $R^{24}$ sont en outre choisis aussi indépendamment parmi les groupes aryloxy comportant jusqu'à 10 atomes de carbone, cycloalcoxy comportant jusqu'à 8 atomes de carbone, cycloalkyl(comportant jusqu'à 8 atomes de carbone)carbonyloxy, cycloalcoxy(comportant jusqu'à 8 atomes de carbone)carbonyle, aroyloxy comportant jusqu'à 11 atomes de carbone, oxacycloalcoxy comportant jusqu'à 7 atomes de carbone, oxacycloalcényloxy comportant jusqu'à 7 atomes de carbone, oxacycloalcoxy(comportant jusqu'à 7 atomes de carbone)carbonyle, oxacycloalkyl(comportant jusqu'à 7 atomes de carbone)carbonyloxy et aryloxy(comportant jusqu'à 10 atomes de carbone)carbonyle, chacun d'eux étant non substitué ou substitué par un groupe fluoro, alkyle en $C_1$-$C_6$ ou alcoxy en $C_1$-$C_6$, à condition que tout substituant lié au reste de la molécule par l'intermédiaire d'un atome d'oxygène lié par une liaison simple ne puisse pas être un substituant sur le même atome de carbone fixé par une liaison simple à un autre atome d'oxygène; ou bien 2 groupes adjacents, choisis parmi $R^9$-$R^{26}$, avec les atomes auxquels ils sont fixés, peuvent former un noyau cycloalkyle, oxacycloalkyle ou bicycloalkyle à 5-8 chaînons.

3. Polymère selon la revendication 2, qui est un polymère d'un monomère de formule

$$L'\text{-}(D\text{-}A\text{-}L)_{a1}\text{-}(S'')_{c}\text{-}(S'\text{-}L''')_{a2}\text{-}L'' \qquad (II)$$

dans laquelle l'un de a1 et a2 vaut zéro et l'autre vaut un;
S″, D, A, S′ et L sont tels que définis dans la revendication 1 ou 2;
c vaut 1 à 10, mais a multiplié par c vaut 1-10;
L‴ est une liaison ou -G-;
L′ et L″ sont chacun H ou un groupe fonctionnel polymérisable choisi parmi P′-, P′-B-, P′-BG-, P′-GB- et P′-PGB′-, où B, G, B′ sont tous tels que définis dans la revendication 1 ou 2;
et P′ est un groupe à insaturation éthylénique, un groupe amino, hydroxy, isocyanato, isothiocyanato, carboxy, anhydride d'acide carboxylique, halogénure d'acide carboxylique, époxy, ou un autre groupe copolymérisable ou réticulable.

4. Polymère selon la revendication 3, qui est un copolymère du monomère de formule II et d'un monomère copolymérisable.

5. Dispositif ophtalmique d'un polymère selon la revendication 1.

6. Dispositif ophtalmique d'un polymère selon la revendication 2.

7. Dispositif ophtalmique d'un polymère selon la revendication 3.

8. Dispositif ophtalmique d'un polymère selon la revendication 4.

9. Dispositif selon la revendication 5, qui est une lentille de contact.

10. Dispositif selon la revendication 6, qui est une lentille de contact.

11. Dispositif selon la revendication 7, qui est une lentille de contact.

12. Dispositif selon la revendication 8, qui est une lentille de contact.

**Revendications pour l'Etat contractant suivant : ES**

1. Procédé de fabrication d'un polymère réticulé perméable à l'oxygène, optiquement transparent, mouillable, essentiellement non gonflable dans un environnement aqueux, possédant des motifs S' de formule

$$-L4-(A1)_{x1}-(B2A2)_{x2}-(B1)_{x3}-L5- \quad (I)$$

dans laquelle x1 et x3 sont chacun indépendamment un nombre entier de zéro à 25;
x2 est un nombre entier de 1 à 25;
et chacun des radicaux A1, A2, B1 et B2 est choisi indépendamment parmi
a) les siloxanes linéaires de formule

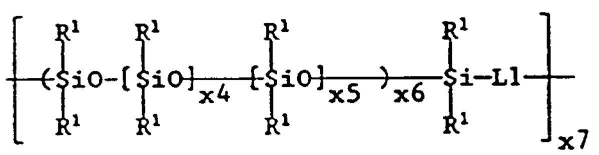
(IV)

et b) les siloxanes cycliques de formule

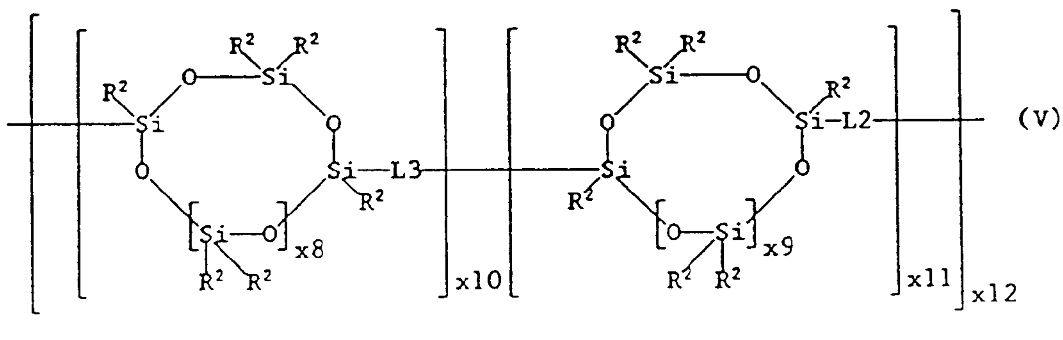
(V)

à condition que A1 ne soit pas identique à B2 et que B1 ne soit pas identique à A2 et que B2 et A2 ne soient pas identiques;
à condition aussi que l'un au moins des radicaux A1, A2, B1 et B2 réponde à la formule (V);
dans laquelle chaque $R^1$ peut être identique ou différent; chaque $R^2$ peut être identique ou différent;
chacun de x4, x5, x6 et x10 vaut indépendamment de zéro à 25;
chacun de x7, x11 et x12 vaut indépendamment de 1 à 25;
chacun de x8 et x9 vaut indépendamment zéro ou un;
chacun de $R^1$ et $R^2$ est choisi indépendamment parmi
aa) un groupe alkyle en $C_1$-$C_{18}$ et un groupe aryle comportant jusqu'à 12 atomes de carbone, chacun d'eux étant non substitué ou substitué par un atome d'halogène ou par un groupe alkyle en $C_1$-$C_4$;
ab) un atome d'halogène; et
ac) un groupe de formule

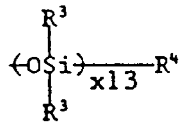 (VI)

dans laquelle chaque $R^3$ est indépendamment un groupe alkyle en $C_1$-$C_{14}$, -OSi$(R^5)_3$ ou aryle en $C_6$-$C_{12}$, chaque $R^5$ et $R^4$ étant choisi indépendamment parmi les groupes alkyle en $C_1$-$C_4$, aryle en $C_6$-$C_{12}$, époxy, halogéno, hydroxyalkyle en $C_1$-$C_4$, amino, aminoalkyle en $C_1$-$C_4$, hydroxy, isocyanato et isothiocyanato; et x13 vaut 1 à 12, de préférence 1 à 5; L3 est un groupe de liaison de formule

$$-W-(G-W)_{a3}- \quad (VII)$$

dans laquelle a3 vaut zéro ou un;
chaque W est choisi parmi

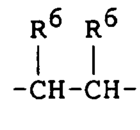

et -O-, lorsque a3 vaut zéro ou un, et aussi parmi

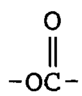 et 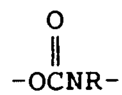

lorsque a3 vaut 1;
et dans laquelle l'atome W fixé à un atome de silicium est soit un atome de carbone saturé, soit un atome d'oxygène, et chaque $R^6$ est indépendamment un atome d'hydrogène ou un groupe alkyle inférieur;
L1 et L2 sont chacun choisis parmi
ba) un groupe de formule VII lorsqu'il relie 2 atomes de silicium et
bb) un groupe de formule

$$-W-(G-J)_{a4}- \quad (VIII)$$

lorsqu'il ne relie pas deux atomes de silicium et W est fixé à un atome de silicium, dans laquelle a4 vaut zéro ou un; W est tel que défini ci-dessus;
et J est choisi parmi une liaison,

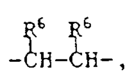, -O-, 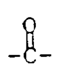, 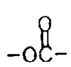, 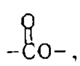, 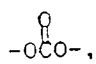, 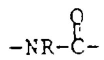, 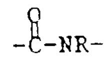, 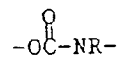,

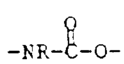 et 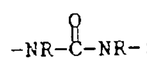;

L4 est choisi indépendamment parmi une liaison et des groupes de formule VII et VIII;
L5 est choisi indépendamment parmi une liaison et des groupes de formules VII et VIII;
G est choisi dans le groupe constitué par

i) un groupe de liaison aliphatique divalent comportant jusqu'à 25 atomes de carbone, qui peut être interrompu par un motif d'interruption choisi parmi

-O-, 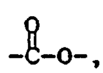, 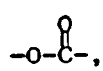, -NR-, 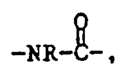, 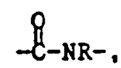,

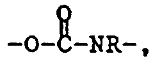, 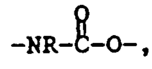, 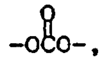, ou 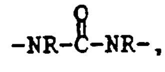,

ces groupes divalents pouvant être substitués par un groupe alkyle inférieur;

ii) un groupe divalent cycloaliphatique à 5-7 chaînons, un groupe divalent cycloaliphatique à 5-7 chaînons-aliphatique en $C_1$-$C_{18}$ et un groupe divalent aliphatique en $C_1$-$C_{18}$-cycloaliphatique à 5-7 chaînons-aliphatique en $C_1$-$C_{18}$, dont chacun peut être interrompu dans sa partie non cyclique ou entre sa partie cyclique et sa partie non cyclique par un motif d'interruption, ou substitué par un substituant, ou à la fois interrompu et substitué, comme décrit en i) ci-dessus;

iii) un groupe arylène en $C_6$-$C_{25}$ divalent, qui est non substitué ou substitué par un substituant choisi parmi un atome d'halogène, un groupe alkyle en $C_1$-$C_4$, perhalogénoalkyle en $C_1$-$C_{12}$, amino, carboxy, alcoxycarbonyle en $C_1$-$C_4$, aminocarbonyle, alkyl(en $C_1$-$C_4$)aminocarbonyle, di(alkyl en $C_1$-$C_4$)-aminocarbonyle et un polyglycol de formule

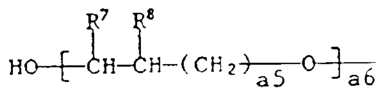

(IX)

dans laquelle a5 vaut zéro ou un;

l'un des radicaux $R^7$ et $R^8$ est un atome d'hydrogène et l'autre est un groupe méthyle ou un atome d'hydrogène lorsque a5 vaut zéro; et les deux radicaux $R^7$ et $R^8$ sont des atomes d'hydrogène lorsque a5 vaut un;

et a6 est un nombre entier jusqu'à 60;

iv) un groupe arylalkyle ou alkylaryle divalent comportant 7-25 atomes de carbone, chacun d'eux pouvant être interrompu, dans la partie alkyle ou entre les parties alkyle et aryle, par un groupe d'interruption tel que défini en i) ci-dessus, et chacun desdits groupes arylalkyle et alkylaryle non interrompus ou interrompus étant non substitué ou substitué sur le noyau aryle comme défini en iii) et/ou substitué dans la partie alkyle par un substituant tel que défini en i);

v) un groupe aliphatyl-aryl-aliphatyle divalent dans lequel le nombre total d'atomes de carbone du groupe aliphatyle est d'au plus 40, et la partie aryle étant en $C_6$-$C_{14}$, les parties aliphatyle étant non interrompues ou interrompues par un motif d'interruption tel que défini en i) ci-dessus, le groupe aliphatyl-aryl-aliphatyle étant aussi éventuellement interrompu entre un groupe aliphatyle, ou les deux groupes aliphatyle, et le groupe aryle par un groupe d'interruption tel que défini en i) ci-dessus, les groupes aliphatyle étant non substitués ou substitués par un substituant tel que défini en i) ci-dessus, et/ou la partie aryle étant non substituée ou substituée par un substituant tel que défini en iii) ci-dessus; dans lequel les substances de départ sont mises à réagir de façon classique.

2. Procédé selon la revendication 1, dans lequel le polymère réticulé de la revendication 1 possède des motifs S″ de formule

$$-(S'\text{-}L\text{-}D\text{-}A\text{-}L)_a- \qquad \text{(III)}$$

dans laquelle S′ répond à la formule I telle que définie dans la revendication 1;
a est un nombre entier de 1-10;
chaque D est -O- ou -NR-, R étant un atome d'hydrogène ou un groupe alkyle inférieur, ou encore une liaison;
chaque L est -BGB′-, -BG- ou -GB-;
chaque B et B′ est choisi indépendamment parmi -CO-, -COO- et -C(O)NR-, où le groupe carbonyle est fixé à L4, L5, D ou A;
G est tel que défini dans la revendication 1;
chaque A est indépendamment un segment de formule X,

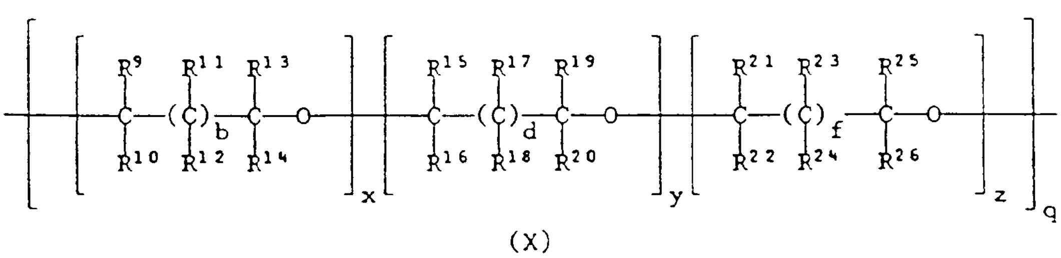

(X)

l'atome d'oxygène terminal de chaque motif de formule X pouvant être remplacé par -N(R)-;
où chaque b, d et f vaut indépendamment 0-4; q est un nombre entier de 1 à 1 000; chaque x, y et z vaut

indépendamment 0 à 100, l'un au moins de x, y et z valant au moins 1; et (x+y+z) multiplié par q a une valeur de 4 à 1 000; chacun des radicaux $R^9$, $R^{10}$, $R^{13}$-$R^{16}$, $R^{19}$-$R^{22}$, $R^{25}$ et $R^{26}$ est choisi indépendamment dans le groupe constitué par un atome d'hydrogène, un atome d'halogène, un radical contenant un groupement aliphatique, aromatique ou hétérocyclique, choisi parmi les groupes alkyle en $C_1$-$C_{16}$ non substitués; alkyle en $C_1$-$C_{16}$ substitués; alcényle en $C_2$-$C_{16}$ non substitués; et alcényle en $C_2$-$C_{16}$ substitués; dans lesquels les substituants alkyle et alcényle sont choisis indépendamment parmi les groupes alcoxycarbonyle en $C_1$-$C_{16}$, alcényloxycarbonyle en $C_2$-$C_{16}$, fluoro, aryle comportant jusqu'à 10 atomes de carbone, alcoxy en $C_1$-$C_{16}$, formyloxy, alcanoyloxy en $C_2$-$C_{16}$, aryloxy comportant jusqu'à 10 atomes de carbone, alcénoyloxy en $C_3$-$C_6$, aroyle comportant jusqu'à 11 atomes de carbone, aroyloxy comportant jusqu'à 11 atomes de carbone, cycloalkyle en $C_3$-$C_8$, cycloalcoxy en $C_3$-$C_8$, cycloalkyl(en $C_3$-$C_8$)-carbonyloxy, cycloalcoxy(en $C_3$-$C_8$)carbonyle, oxacycloalkyle comportant jusqu'à 7 atomes de carbone, oxacycloalcoxy comportant jusqu'à 7 atomes de carbone, oxacycloalcoxy(comportant jusqu'à 7 atomes de carbone)carbonyle, oxacycloalkyle(comportant jusqu'à 7 atomes de carbone)carbonyloxy, et aryl(comportant jusqu'à 10 atomes de carbone)oxycarbonyle, chacun desdits substituants alkyle et alcényle étant non substitué ou substitué par un groupe alkyle en $C_1$-$C_6$, fluoro ou alcoxy en $C_1$-$C_6$, à condition que ce dernier groupe alcoxy ne soit pas fixé à un atome de carbone déjà fixé par une liaison simple à un autre atome d'oxygène; $R^9$, $R^{10}$, $R^{13}$-$R^{16}$, $R^{19}$-$R^{22}$, $R^{25}$ et $R^{26}$ étant en outre choisis indépendamment parmi les groupes aryle comportant jusqu'à 10 atomes de carbone, cycloalkyle en $C_3$-$C_8$ et oxacycloalkyle comportant jusqu'à 7 atomes de carbone, chacun d'eux étant non substitué ou substitué aussi par un substituant choisi dans le groupe des substituants dudit groupe alkyle $R^9$ cités ci-dessus;
$R^{11}$, $R^{12}$, $R^{17}$, $R^{18}$, $R^{23}$ et $R^{24}$ sont choisis parmi les mêmes groupes que ceux définis ci-dessus pour $R^9$; et $R^{11}$, $R^{12}$, $R^{17}$, $R^{18}$, $R^{23}$ et $R^{24}$ sont aussi choisis indépendamment parmi les groupes alcoxycarbonyle en $C_1$-$C_{16}$, alcénoyloxy en $C_3$-$C_{16}$, alcényloxycarbonyle en $C_2$-$C_{16}$ et alcanoyloxy en $C_1$-$C_{16}$, chacun d'eux étant non substitué ou substitué par un grcupe fluoro, aryle comportant jusqu'à 10 atomes de carbone ou alcoxy en $C_1$-$C_{16}$, et $R^{11}$, $R^{12}$, $R^{17}$, $R^{18}$, $R^{23}$ et $R^{24}$ sont en outre choisis aussi indépendamment parmi les groupes aryloxy comportant jusqu'à 10 atomes de carbone, cycloalcoxy comportant jusqu'à 8 atomes de carbone, cycloalkyl(comportant jusqu'à 8 atomes de carbone)carbonyloxy, cycloalcoxy(comportant jusqu'à 8 atomes de carbone)carbonyle, aroyloxy comportant jusqu'à 11 atomes de carbone, oxacycloalcoxy comportant jusqu'à 7 atomes de carbone, oxacycloalcényloxy comportant jusqu'à 7 atomes de carbone, oxacycloalcoxy(comportant jusqu'à 7 atomes de carbone)carbonyle, oxacycloalkyl(comportant jusqu'à 7 atomes de carbone)carbonyloxy et aryloxy(comportant jusqu'à 10 atomes de carbone)carbonyle, chacun d'eux étant non substitué ou substitué par un groupe fluoro, alkyle en $C_1$-$C_6$ ou alcoxy en $C_1$-$C_6$, à condition que tout substituant lié au reste de la molécule par l'intermédiaire d'un atome d'oxygène lié par une liaison simple ne puisse pas être un substituant sur le même atome de carbone fixé par une liaison simple à un autre atome d'oxygène; ou bien 2 groupes adjacents, choisis parmi $R^9$-$R^{26}$, avec les atomes auxquels ils sont fixés, peuvent former un noyau cycloalkyle, oxacycloalkyle ou bicycloalkyle à 5-8 chaînons.

3. Procédé selon la revendication 2, dans lequel le polymère est un polymère d'un monomère de formule

$$L'\text{-}(D\text{-}A\text{-}L)_{a1}\text{-}(S'')_{c}\text{-}(S'\text{-}L''')_{a2}\text{-}L'' \qquad (II)$$

dans laquelle l'un de a1 et a2 vaut zéro et l'autre vaut un;
S″, D, A, S′ et L sont tels que définis dans la revendication 1 ou 2;
c vaut 1 à 10, mais a multiplié par c vaut 1-10;
L‴ est une liaison ou -G-;
L′ et L″ sont chacun H ou un groupe fonctionnel polymérisable choisi parmi P′-, P′-B-, P′-BG-, P′-GB- et P′-PGB′-, où B, G, B′ sont tous tels que définis dans la revendication 1 ou 2;
et P′ est un groupe à insaturation éthylénique, un groupe amino, hydroxy, isocyanato, isothiocyanato, carboxy, anhydride d'acide carboxylique, halogénure d'acide carboxylique, époxy, ou un autre groupe copolymérisable ou réticulable.

4. Procédé selon la revendication 3, dans lequel le polymère est un copolymère du monomère de formule II et d'un monomère copolymérisable.

5. Dispositif ophtalmique d'un polymère selon la revendication 1.

6. Dispositif ophtalmique d'un polymère selon la revendication 2.

**7.** Dispositif ophtalmique d'un polymère selon la revendication 3.

**8.** Dispositif ophtalmique d'un polymère selon la revendication 4.

**9.** Dispositif selon la revendication 5, qui est une lentille de contact.

**10.** Dispositif selon la revendication 6, qui est une lentille de contact.

**11.** Dispositif selon la revendication 7, qui est une lentille de contact.

**12.** Dispositif selon la revendication 8, qui est une lentille de contact.